# EUROPEAN PATENT APPLICATION

(11) **EP 2 574 064 A1**
(43) Date of publication of application: **27.03.2013**
(21) Application number: 12785750.6
(22) Date of filing: 18.04.2012
(51) Int. Cl.: H04N 13/00

(54) **IMAGE DATA TRANSMITTING DEVICE, IMAGE DATA TRANSMITTING METHOD AND IMAGE DATA RECEIVING DEVICE**

(30) Priority: 19.05.2011 JP 2011112576
(71) Applicant: Sony Corporation, Tokyo 108-0075 (JP)
(72) Inventor: TSUKAGOSHI, Ikuo, Tokyo 108-0075 (JP)
(74) Representative: Ealey, Douglas Ralph
(86) International application number: PCT/JP2012/060517
(87) International publication number: WO 2012/157394

(57) **Abstract**

Synchronous display on the reception side is secured when transmitting a plurality of video streams, which respectively include a plurality of image data sets to be synchronously displayed, as separate broadcast streams.

From a transmission side, a stream with a predetermined container format which has a first video stream including first image data is transmitted. Stream synchronization information is inserted into the first video stream. The stream synchronization information is for synchronizing the first video stream with a second video stream, which includes second image data displayed in synchronization with the first image data, frame by frame. On a reception side, it is possible to synchronize the first video stream with the second video stream frame by frame on the basis of stream synchronization information.

## Description

### Technical Field

The present technology relates to an image data transmission apparatus, an image data transmission method, and an image data reception apparatus. In particular, the present technology relates to an image data transmission apparatus, an image data transmission method and an image data reception apparatus which can be applied when transmitting a plurality of video streams for services such as stereoscopic image display as separate broadcast streams.

### Background Art

For example, PTL 1 proposes a method of transmitting stereoscopic image data using television broadcast waves. In this case, stereoscopic image data including left-eye image data and right-eye image data is transmitted, and a stereoscopic image is displayed by a television receiver by using binocular disparity.

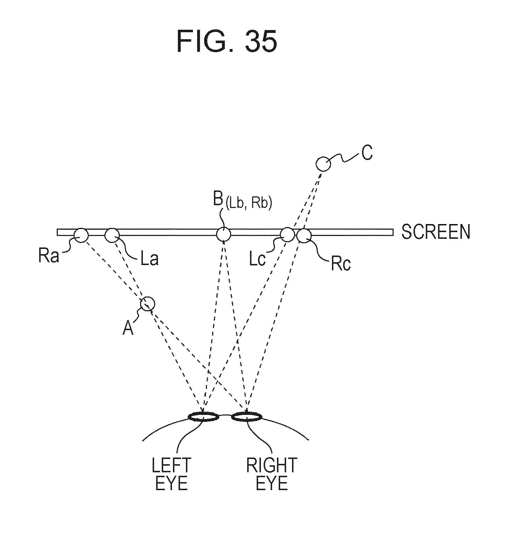

Fig. 35 shows a relationship between the display positions of left and right images of an object on a screen and the reproduction position of the stereoscopic image (3D image) in stereoscopic image display using binocular disparity. For example, regarding an object A of which a left image La is displayed so as to be shifted to the right side and a right image Ra is displayed so as to be shifted to the left side on the screen, as shown in the drawing, left and right lines of sight cross each other in front of a screen surface, and thus the reproduction position of the stereoscopic image thereof is in front of the screen surface.

Further, for example, regarding an object B of which a left image Lb and a right image Rb are displayed at the same position on the screen, as shown in the drawing, left and right lines of sight cross each other on the screen surface, and thus the reproduction position of the stereoscopic image thereof is on the screen surface. Furthermore, for example, regarding an object C of which a left image Lc is displayed so as to be shifted to the left side and a right image Rc is displayed so as to be shifted to the right side on the screen, as shown in the drawing, left and right lines of sight cross each other behind the screen surface, and thus the reproduction position of the stereoscopic image thereof is behind the screen surface.

### Citation List

### Patent Literature

PTL 1: Japanese Unexamined Patent Application Publication No. 2005-6114

### Summary of Invention

### Technical Problem

For example, in the case of a broadcast in which bands of terrestrial broadcast and the like are restricted, it is difficult to send left-eye image data and right-eye image data with full-HD resolution (1920*1080) in parallel with each other. In this case, it can be considered that video streams respectively including the left-eye image data and the right-eye image data are transmitted as separate broadcast streams, but it is necessary to secure synchronous display on the reception side.

In addition, such a problem also arises when ultra-high-definition image data of 4K2K, 8K4K, or the like is segmented and the video streams including the respective segmented image data sets are transmitted as separate broadcast streams. Further, such a problem also arises when video streams respectively including two image data sets for overlay display are transmitted as separate broadcast streams.

An object of the present technology is to secure synchronous display on the reception side when transmitting a plurality of video streams, which respectively include a plurality of image data sets to be synchronously displayed, as separate broadcast streams.

### Solution to Problem

A concept of the present technology lies in an image data transmission apparatus including a transmission section that transmits a stream with a predetermined container format which has a first video stream including first image data, wherein stream synchronization information for synchronizing the first video stream with a second video stream, which includes second image data displayed in synchronization with the first image data, frame by frame is inserted into the first video stream.

In the present technology, the transmission section transmits the stream with the predetermined container format which has the first video stream including the first image data. The stream synchronization information is inserted into the first video stream. The stream synchronization information is information for synchronizing the first video stream with the second video stream, which includes the second image data displayed in synchronization with the first image data, frame by frame in the first video stream.

As described above, in the present technology, the stream synchronization information is inserted into the first video stream. Hence, on the reception side, on the basis of the stream synchronization information, it is possible to synchronize the first video stream with the second video stream frame by frame. Accordingly, on the reception side, the synchronous display of the first image data and the second image data is secured.

In addition, in the present technology, for example, the stream synchronization information may be inserted into a picture layer of the first or the second video stream, and the stream synchronization information may include information, which indicates whether or not to skip display of the corresponding frame, and a correction value of timing of displaying the corresponding frame.

Further, in the present technology, for example, the stream synchronization information additionally may include information which indicates the number of frames from an initial frame of the stream, flag information which indicates presence of the second video stream, and information which indicates the type of synchronous display. As the type of the synchronous display, for example, there are stereoscopic image display, high-definition image display, overlay display, and the like.

Furthermore, in the present technology, for example, initial time stamp information of a basic video stream of the first video stream and the second video stream may be inserted into the stream with the predetermined container format. As described above, by inserting the initial time stamp information, on the reception side, even when performing reproduction from the middle of the basic video stream through random access, it is possible to synchronize the first video stream and the second video stream frame by frame.

In addition, in the present technology, information, which indicates the number of streams with the predetermined container format with the second video stream including the second image data, may be inserted into the stream with the predetermined container format.

Furthermore, in the present technology, information, which indicates whether or not the stream synchronization information is inserted into a basic video stream of the first video stream and the second video stream, may be further inserted into the stream with the predetermined container format.

Further, another concept of the present technology lies in an image data reception apparatus including a first reception section that receives a stream with a predetermined container format which has a basic video stream including first image data; and a second reception section that receives a stream with a predetermined container format which has an extended video stream including second image data displayed in synchronization with the first image data, wherein frame synchronization information, which is for synchronizing the basic video stream with the extended video stream frame by frame, is inserted into the extended video stream for each frame, and wherein the apparatus further includes a first data acquisition section that acquires the first image data included in the basic video stream which has the stream received by the first reception section; a second data acquisition section that acquires the second image data included in the extended video stream which has the stream received by the second reception section; and a synchronization management section that synchronizes the second image data, which is acquired by the second data acquisition section, with the first image data, which is acquired by the first data acquisition section, frame by frame on the basis of the frame synchronization information.

In the present technology, the first reception section receives the stream with the predetermined container format which has the basic video stream including the first image data, and the second reception section receives the stream with the predetermined container format which has the extended video stream including the second image data displayed in synchronization with the first image data. Here, the frame synchronization information, which is for synchronizing the basic video stream with the extended video stream frame by frame, is inserted into the extended video stream for each frame.

The first data acquisition section acquires the first image data included in the basic video stream, and the second data acquisition section acquires the second image data included in the extended video stream. In this case, as the extended video stream, one or a plurality of video streams can be considered. In addition, the synchronization management section adjusts a temporal axis so as to synchronize the second image data with the first image data frame by frame on the basis of the frame synchronization information. Thereby, synchronous display of the first image data and the second image data is secured.

Further, still another concept of the present technology lies in an image data reception apparatus including a first reception section that receives a stream with a predetermined container format which has a basic video stream including first image data; and a second reception section that receives a stream with a predetermined container format which has an extended video stream including second image data displayed in synchronization with the first image data. The apparatus further includes a first data acquisition section that acquires the first image data included in the basic video stream which has the stream received by the first reception section; a second data acquisition section that acquires the second image data included in the extended video stream which has the stream received by the second reception section; and a synchronization management section that synchronizes the second image data, which is acquired by the second data acquisition section, with the first image data, which is acquired by the first data acquisition section, frame by frame on the basis of time stamp information.

In the present technology, the synchronization management section adjusts a temporal axis so as to synchronize the second image data with the first image data frame by frame on the basis of the time stamp information. Thereby, even when there is no frame synchronization information for synchronizing the basic video stream and the extended video stream described above frame by frame, synchronous display of the first image data and the second image data is secured.

### Advantageous Effects of Invention

According to the present technology, it is possible to secure synchronous display on the reception side when transmitting a plurality of video streams, which respectively include a plurality of image data sets to be synchronously displayed, as separate broadcast streams.

### Brief Description of Drawings

[Fig. 1] Fig. 1 is a block diagram illustrating a configuration example of a broadcast system according to an embodiment of the present technology.
[Fig. 2] Fig. 2 is a diagram illustrating an example of the combination of a basic broadcast stream (Basic stream) and an extended broadcast stream (Extended stream).
[Fig. 3] Fig. 3 is a diagram illustrating application of transmission of the basic broadcast stream and the extended broadcast stream in stereoscopic (3D) image display.
[Fig. 4] Fig. 4 is a diagram schematically illustrating an example of transmission of stereoscopic image data in a broadcast system.
[Fig. 5] Fig. 5 is a diagram schematically illustrating an example of stream elements which constitute a single program service in the broadcast system.
[Fig. 6] Fig. 6 is a diagram illustrating a setting example of "Transport_Stream id" and the like of the basic broadcast stream (Basic Stream1: TS_B1) and the extended broadcast stream (Extended_Stream1: TS_E1).
[Fig. 7] Fig. 7 is a diagram schematically illustrating another example of stream elements which constitute a single program service in the broadcast system.
[Fig. 8] Fig. 8 is a diagram illustrating stream mapping information.
[Fig. 9] Fig. 9 is a block diagram illustrating a configuration example of the transmission apparatus, which constitutes the broadcast system, in a broadcast station.
[Fig. 10] Fig. 10 is a block diagram illustrating a specific configuration example of the encoder which constitutes the transmission apparatus.
[Fig. 11] Fig. 11 is a block diagram illustrating a configuration example of a reception apparatus, which constitutes a broadcast system, in a user's home.
[Fig. 12] Fig. 12 is a diagram illustrating a situation where selection of a reproduction scheduling program on an EPG screen is performed.
[Fig. 13] Fig. 13 is a diagram illustrating a configuration example of an IP network between a reception side and a transmitting station A (channel 1), a transmitting station B (channel 2), and a transmitting station C (channel 3) which are transmission sides.
[Fig. 14] Fig. 14 is a diagram illustrating an example of dynamic stream switching including the extended broadcast stream in the reception apparatus.
[Fig. 15] Fig. 15 is a diagram illustrating a situation where the extended stream is acquired by streaming reception through the IP network or reading from a storage on the basis of the stream mapping information in the dynamic stream switching including the extended broadcast stream in the reception apparatus.
[Fig. 16] Fig. 16 is a diagram (1/2) illustrating a structural example (Syntax) of stream synchronization information (Stream_Synchronization_Information).
[Fig. 17] Fig. 17 is a diagram (2/2) illustrating the structural example (Syntax) of the stream synchronization information.
[Fig. 18] Fig. 18 is a diagram (1/2) illustrating contents (Semantics) of principal information in the structural example of the stream synchronization information.
[Fig. 19] Fig. 19 is a diagram (2/2) illustrating the contents (Semantics) of the principal information in the structural example of the stream synchronization information.
[Fig. 20] Fig. 20 is a diagram illustrating a structural example (Syntax) of a stream synchronization information descriptor (Stream_Synchronization_Information_descriptor).
[Fig. 21] Fig. 21 is a diagram illustrating contents (Semantics) of principal information in the structural example of the stream synchronization information descriptor.
[Fig. 22] Fig. 22 is a diagram illustrating a situation where a value of an initial time stamp of the basic stream in a time period for performing synchronous display is transmitted as a reference of offsets for synchronization.
[Fig. 23] Fig. 23 is a diagram illustrating a situation where display is performed by performing buffer reading in consideration of frame offset amounts, which are obtained by converting differences between display time stamps of the basic stream and the initial time stamp value into frame periods, on the reception side.
[Fig. 24] Fig. 24 is a diagram illustrating an example of edit of the basic stream (Video1), which includes left-eye image data, and the extended stream (Video2) which includes right-eye image data.
[Fig. 25] Fig. 25 is a diagram illustrating a setting example of correction offsets for resynchronization and display skip flags for resynchronization on the transmission side.
[Fig. 26] Fig. 26 is a diagram illustrating a correction example of display timing on the reception side in a case where the correction offsets for resynchronization and the display skip flags for resynchronization are set on the transmission side (encoder side).
[Fig. 27] Fig. 27 is a diagram illustrating a correction example of display timing at the time of video random access.
[Fig. 28] Fig. 28 is a flowchart (1/3) illustrating an example of a sequence of synchronization processing control in a CPU of the reception apparatus.
[Fig. 29] Fig. 29 is a flowchart (2/3) illustrating the example of the sequence of the synchronization processing control in the CPU of the reception apparatus.
[Fig. 30] Fig. 30 is a flowchart (3/3) illustrating the example of the sequence of the synchronization processing control in the CPU of the reception apparatus.
[Fig. 31] Fig. 31 is a diagram illustrating application of transmission of the basic broadcast stream and the extended broadcast stream in display of an ultra-high-definition image.
[Fig. 32] Fig. 32 is a diagram schematically illustrating an example of transmission of the ultra-high-definition image data in the broadcast system.
[Fig. 33] Fig. 33 is a diagram illustrating an example of application of transmission of the basic broadcast stream and the extended broadcast stream in display of an overlay image.
[Fig. 34] Fig. 34 is a diagram illustrating another example of application of the transmission of the basic broadcast stream and the extended broadcast stream in the display of the overlay image.
[Fig. 35] Fig. 35 is a diagram illustrating a relationship between display positions of right and left images of objects on a screen and reproduction positions of stereoscopic images (3D images) thereof in the stereoscopic image display using binocular disparity.

### Description of Embodiments

Hereinafter, modes for carrying out the present technology (hereinafter referred to as "embodiments") will be described. In addition, description will be given in the following order.
1. Embodiment
2. Modified Example

### <1. Embodiment>

### [Broadcast System]

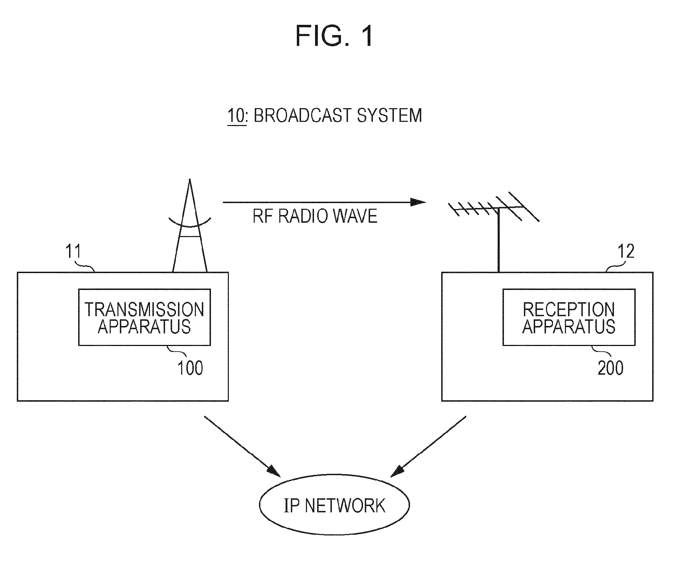

Fig. 1 shows a configuration example of a broadcast system 10 according to an embodiment. The broadcast system 10 is configured to include a transmission apparatus 100 provided on the broadcast station 11 and a reception apparatus 200 provided on user's home 12. In addition, in practice, the reception apparatuses 200 are provided for a plurality of user's homes 12.

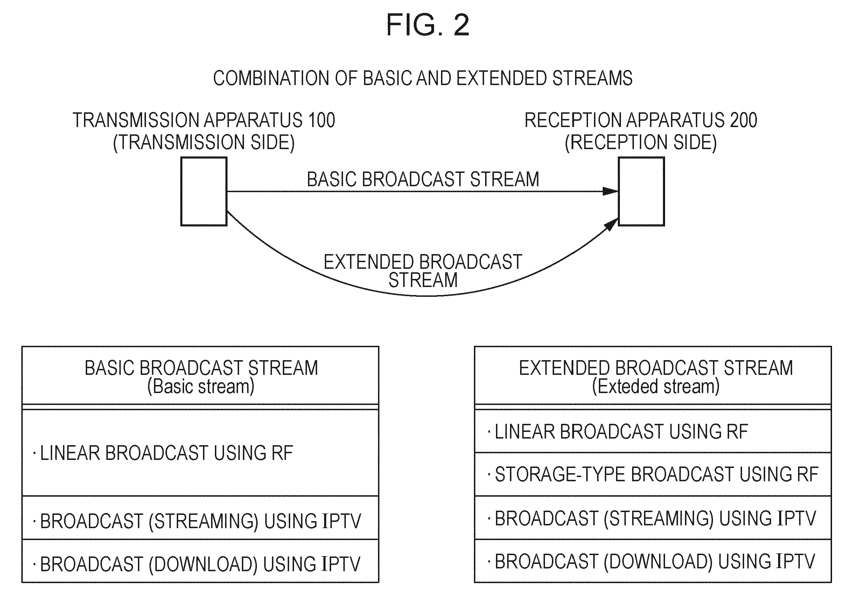

The broadcast station 11 performs broadcast using RF radio waves (broadcast waves) and broadcast (IPTV broadcast) using an IP network. In the broadcast system 10, as shown in Fig. 2, it is possible to transmit a basic broadcast stream (Basic stream) and an extended broadcast stream (Extended stream). Here, a container format of a broadcast stream transmitted by means of RF radio waves is, for example, MPEG2 TS (MPEG2 Transport Stream). Further, a container format of a broadcast stream transmitted by means of IPTV broadcast is, for example, MPEG2 TS or MP4.

As transmission forms of the basic broadcast streams, for example, linear broadcast using RF radio waves, broadcast (streaming) using IPTV, broadcast (download) using IPTV, and the like are considered. On the other hand, as transmission forms of the extended broadcast stream, for example, linear broadcast using RF radio waves, storage-type broadcast using RF radio waves, broadcast (streaming) using IPTV, broadcast (download) using IPTV, and the like are considered.

Here, the basic broadcast stream is a broadcast stream which has a basic video stream including first image data. Further, the extended broadcast stream is a broadcast system which has an extended video stream including second image data to be displayed in synchronization with the first image data. In addition, the second image data may be a plurality of data sets. In this case, the extended broadcast stream may be a plurality of streams.

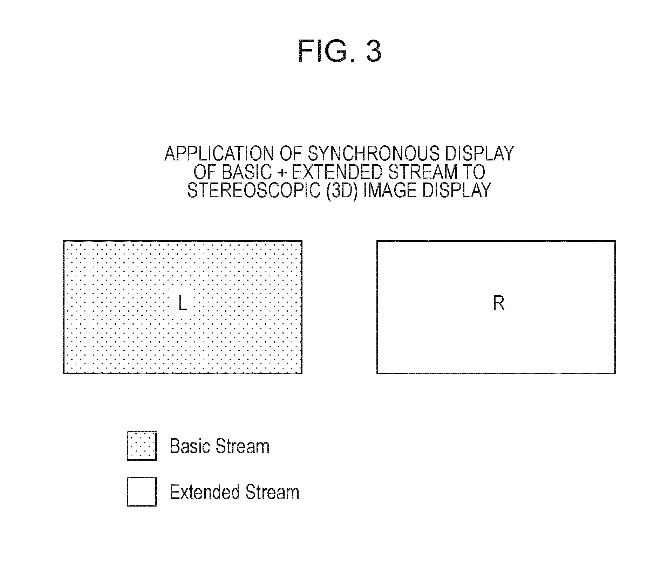

This embodiment will describe a case where the basic broadcast stream is for the linear broadcast using RF radio waves and the extended broadcast stream is for the broadcast (streaming and download) using IPTV. Further, this embodiment will describe, as shown in Fig. 3, a case where the transmission of the basic broadcast stream and the extended broadcast stream is applied to stereoscopic (3D) image display. In this case, the first image data is left-eye image data constituting stereoscopic image data, and the second image data is right-eye image data constituting the stereoscopic image data.

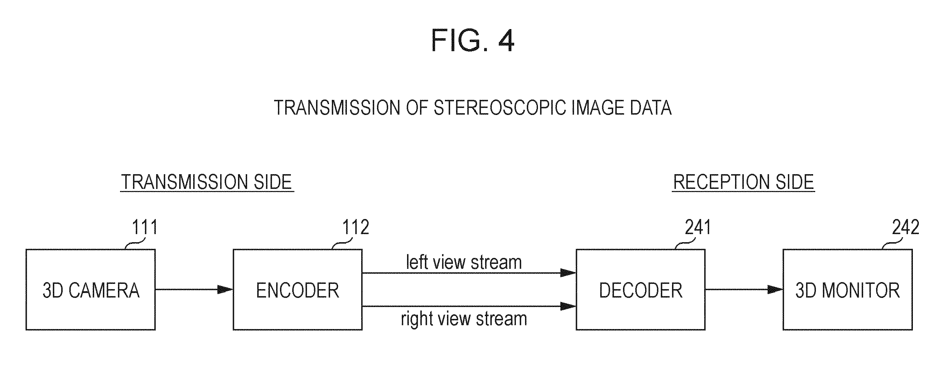

Fig. 4 schematically shows an example of transmission of the stereoscopic image data in the broadcast system 10. The transmission side (the transmission apparatus 100) has, for example, a 3D camera 111 and an encoder 112. The left-eye image data and the right-eye image data, which are obtained by the 3D camera 111, are supplied to the encoder 112. In the encoder 112, the respective image data sets are encoded in an encoding format such as MPEG2 video or AVC, and thereby the basic video stream and the extended video stream are generated.

The basic broadcast stream (left view stream), which has the basic video stream (including the left-eye image data) generated by the encoder 112, is sent from the transmission side to the reception side through RF radio waves. Further, the extended broadcast stream (right view stream), which has the extended video stream (including the right-eye image data) generated by the encoder 112, is sent from the transmission side to the reception side through the IP network.

The reception side (reception apparatus 200) has, for example, a decoder 241 and a 3D monitor 242. In the decoder 241, it is possible to obtain the left-eye image data by performing decoding processing on the basic video stream belonging to the basic broadcast stream (the left view stream). Further, in the decoder 241, it is possible to obtain the right-eye image data by performing decoding processing on the extended video stream belonging to the extended broadcast stream (the right view stream). Then, the left-eye image data and the right-eye image data are supplied to the 3D monitor 242, thereby performing stereoscopic image display.

Returning to Fig. 1, the transmission apparatus 100 inserts stream synchronization information (Stream_Synchronization_Information) into the basic video stream and extended video stream. The stream synchronization information includes information for synchronizing the extended video stream with the basic video stream frame by frame, on the reception side. The stream synchronization information is inserted into a picture layer of the video stream, for example, a user data area of a picture header or an area corresponding thereto. The stream synchronization information also includes information which indicates the number of frames from the initial frame of the stream, information which indicates presence of other broadcast streams being in a synchronized relationship, information which indicates the type of synchronous display, and the like. The stream synchronization information will be described in detail later.

In addition, the transmission apparatus 100 inserts stream synchronization information descriptors (Stream_Synchronization_Information_descriptor) into the basic broadcast stream and the extended broadcast stream. Each stream synchronization information descriptor includes initial time stamp information of the basic video stream and the like. The stream synchronization information descriptor also includes information which indicates the number of other broadcast streams being in a synchronized relationship, information which indicates whether or not the basic video stream includes the above-mentioned stream synchronization information, and the like. The stream synchronization information descriptor will be described in detail later.

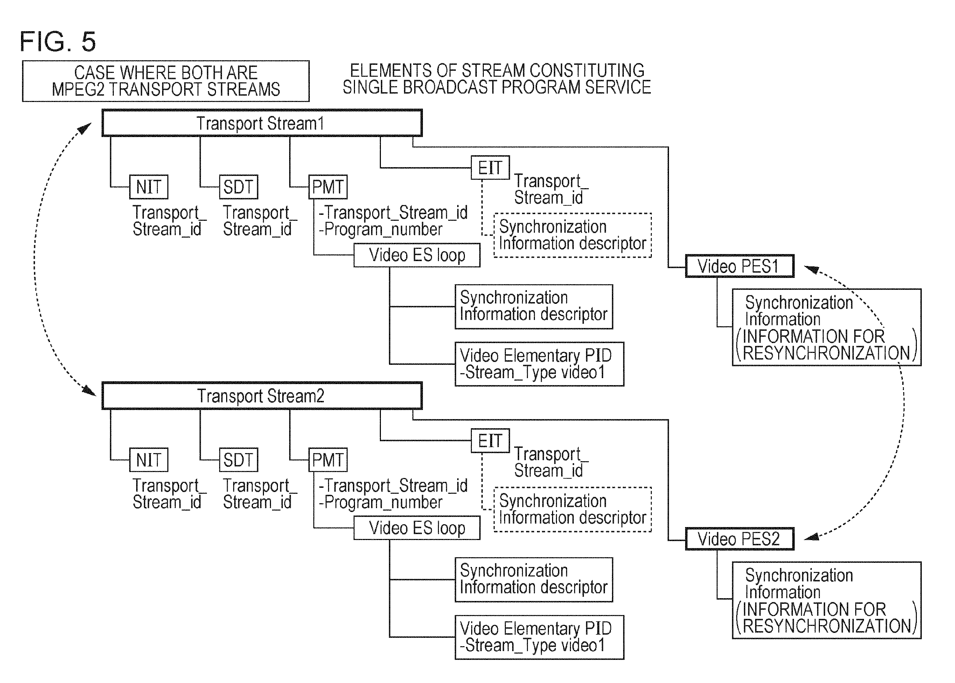

Fig. 5 schematically shows an example of stream elements which constitute a single program service in the broadcast system 10 of Fig. 1. This example shows a case where both container formats of the basic broadcast stream and the extended broadcast stream are MPEG2 TS. Here, "Transport Stream 1" represents the basic broadcast stream which has the basic video stream including the left-eye image data. Further, "Transport Stream 2" represents the extended broadcast stream which has the extended video stream including the right-eye image data.

In this case, "Transport_Stream_id" values of both of "Transport Stream 1" and "Transport Stream 2" are set to be the same. That is, "Transport_Stream_id" values of NIT (Network Information Table), SDT (Service Description Table), PMT (Program Map Table), and EIT (Event Information Table) are set to be the same in both streams. Further, "Program_number" values of PMT are set to be the same in both streams. Thereby, both broadcast streams are associated with each other.

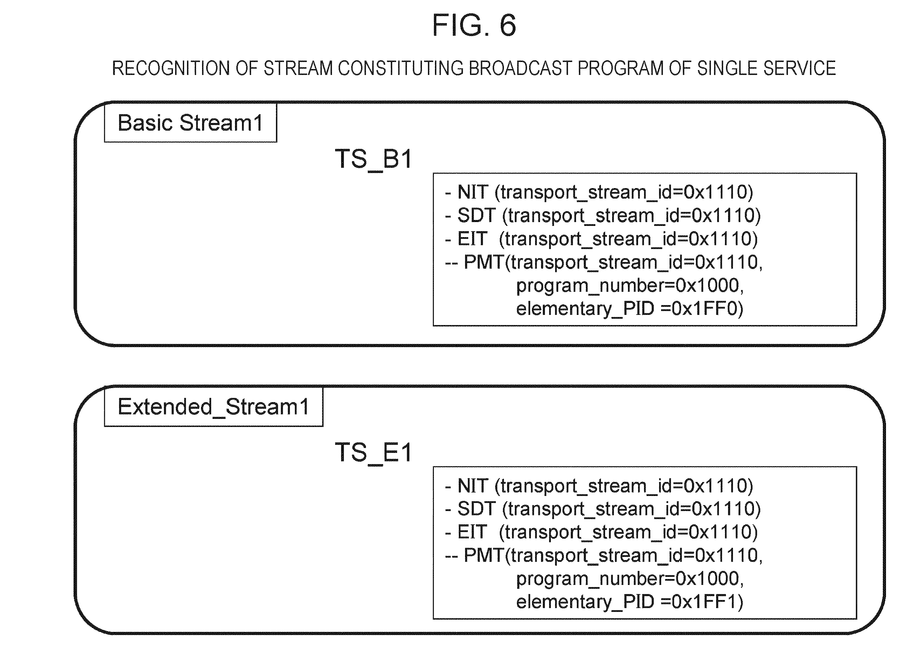

Fig. 6 shows a setting example of respective values of "Transport Stream 1" as the basic broadcast stream (Basic Stream 1: TS_B1) and "Transport Stream 2" as the extended broadcast stream (Extended_Stream 1: TS_E1). In the basic broadcast stream (TS_B1), "transport_stream_id = 0x1110", "program_number = 0x1000", and "elementary_PID = 0x1FF0". On the other hand, in the extended broadcast stream (TS_E1), "transport_stream_id = 0x1110", "program_number = 0x1000", and "elementary_PID - 0x1FF1".

As described above, the values of "transport_stream_id" and "program_number" are the same in the basic broadcast stream and the extended broadcast stream, and thereby it can be seen that both are streams with the same service. Further, the values of "elementary_PID" are different in the basic broadcast stream and the extended broadcast stream, and thereby it can be seen that the basic video stream and the extended video stream having the values are separate video elementary streams.

In PMT of "Transport Stream 1", there is a video elementary loop which has information relating to the video elementary stream (basic video stream). In the video elementary loop, information of the packet identifier (PID), the stream type (Stream_Type), and the like of the basic video stream is assigned, and the above-mentioned stream synchronization information descriptor is assigned.

Similarly, in PMT of "Transport Stream 2", there is a video elementary loop which has information relating to the video elementary stream (extended video stream). In the video elementary loop, information of the packet identifier (PID), the stream type (Stream_Type), and the like of the extended video stream is assigned, and the above-mentioned stream synchronization information descriptor is assigned. In addition, in "Transport Stream 1" and "Transport Stream 2", it can be considered that the stream synchronization information descriptor is assigned to a load of EIT, as indicated by the dashed line of Fig. 5.

Further, "Transport Stream 1" includes a PES packet "Video PES1" which is obtained by packetizing the basic video stream. The above-mentioned stream synchronization information is inserted into the basic video stream. The stream synchronization information is inserted into the user data area of the picture header or the area corresponding thereto. Likewise, "Transport Stream 2" includes a PES packet "Video PES2" which is obtained by packetizing the extended video stream. The above-mentioned stream synchronization information is inserted into the basic video stream. The stream synchronization information is inserted into the user data area of the picture header or the area corresponding thereto.

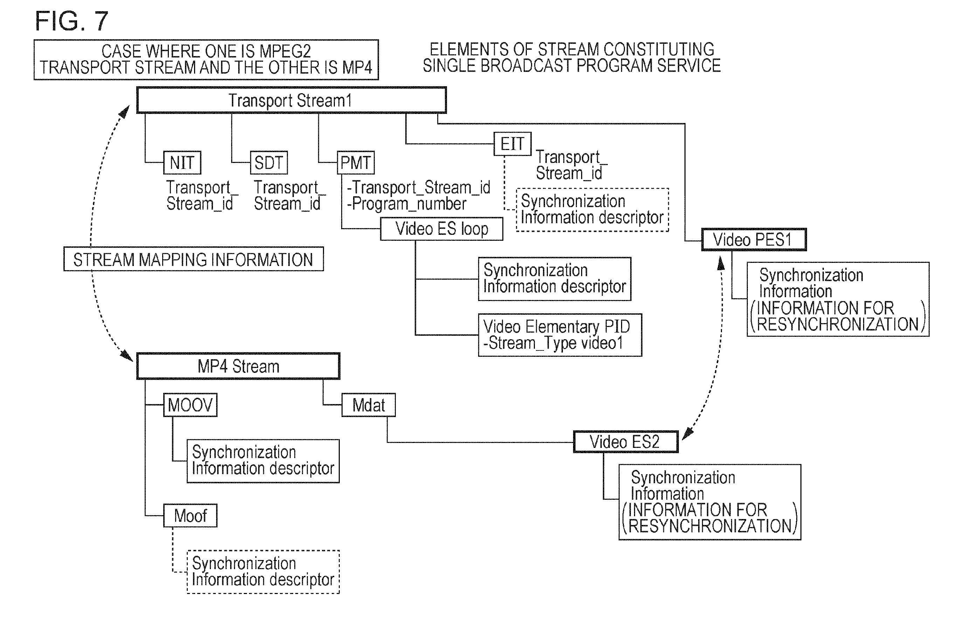

Fig. 7 schematically shows another example of stream elements which constitute a single program service in the broadcast system 10 of Fig. 1. This example shows a case where the container format of the basic broadcast stream is MPEG2 TS and the container format of the extended broadcast stream is MP4. Here, "Transport Stream 1" represents the basic broadcast stream which has the basic video stream including the left-eye image data, and "MP4 Stream" represents the extended broadcast stream which has the extended video stream including the right-eye image data. Although not described in detail, "Transport Stream 1" is the same as the "Transport Stream 1" of Fig. 5.

The "MP4 Stream" has a box structure, and includes a MOOV box, a Mdat box, a Moof box, and the like. The MOOV box is a container including all metadata, and only one MOOV box is included in the file. The Mdat box is a container of data main body, an arbitrary number of Mdat boxes can be included in the file. The extended video stream "Video ES2" is assigned in the Mdat box.

The above-mentioned stream synchronization information descriptor is inserted as metadata into a uuid (private extension) stored in the MOOV box or the Moof box. Further, the above-mentioned stream synchronization information is inserted into the extended video stream assigned to the Mdat box. The stream synchronization information is inserted into the user data area of the picture header or the area corresponding thereto.

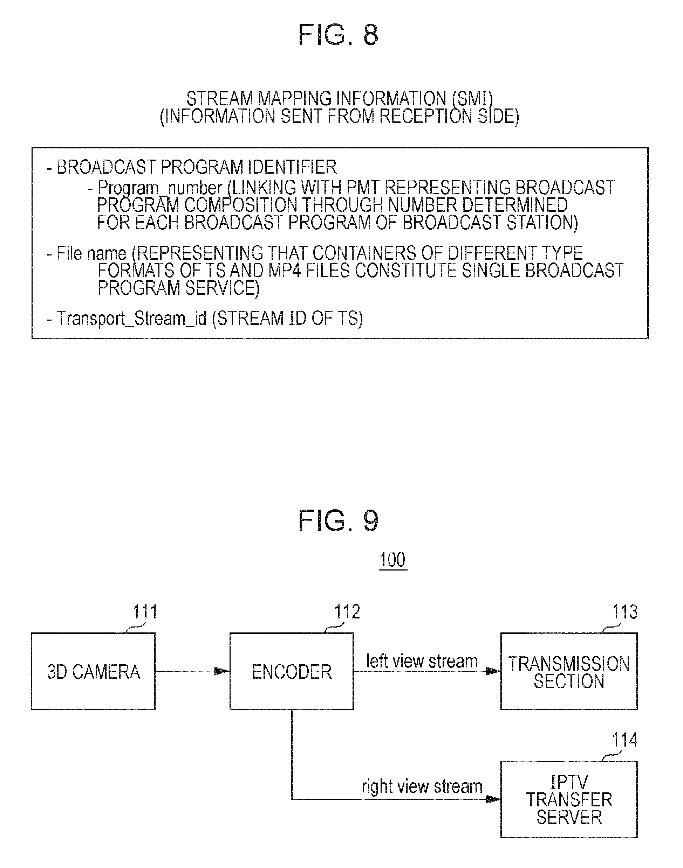

In addition, "Transport Stream 1" and "MP4 Stream" are associated with each other, on the basis of stream mapping information (SMI: Stream Mapping Information) which is set in the reception apparatus 200 in advance. The stream mapping information represents, for example, a correspondence relationship of a program identifier (Program number), a file name, and a stream ID (Transport_Stream_id) of TS. The program identifier (Program number) is to link with the PMT, which represents program composition, through a number determined for each program of the broadcast station. As shown in Fig. 8, the file name is for indicating that containers of different types of format of MPEG2 TS and MP4 files constitute a single program service.

### [Configuration Example of Transmission Apparatus]

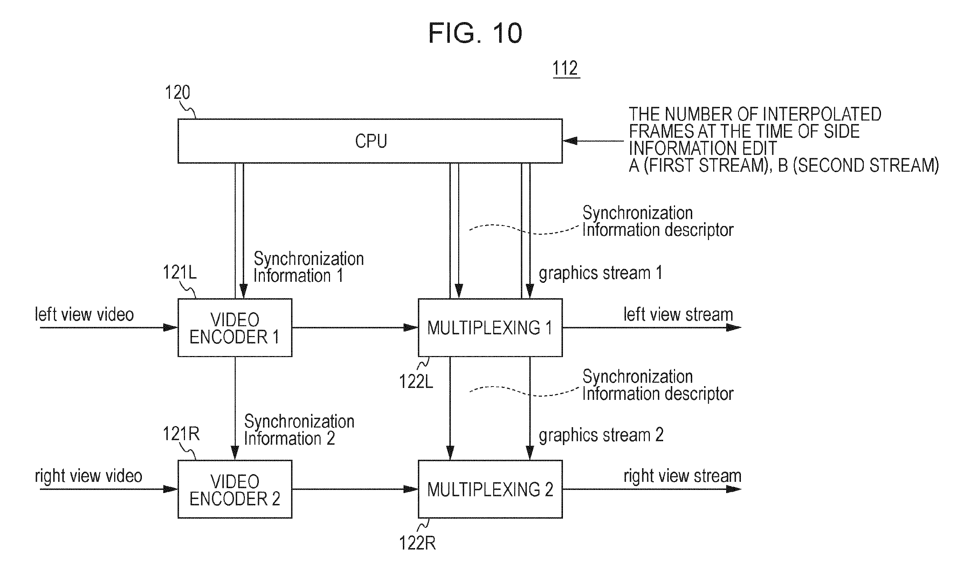

Fig. 9 shows a configuration example of the transmission apparatus 100. The transmission apparatus 100 has the 3D camera 111, the encoder 112, a transmission section 113, and a IPTV broadcast transfer server 114. The 3D camera 111 captures an image of a subject, and outputs left-eye image data and right-eye image data as stereoscopic image data. The encoder 112 encodes respective image data sets in an encoding format such as MPEG2 video or AVC, thereby generating the basic video stream including the left-eye image data and the extended video stream including the right-eye image data. Fig. 10 shows a specific configuration example of the encoder 112. The encoder 112 is configured to include not only a CPU 120 controlling the entire operation but also video encoders 121L and 121R and multiplexing sections 122L and 122R.

The encoder 112 generates the basic broadcast stream (left view stream: Basic Stream) which has the basic video stream including the left-eye image data (left view video). In this case, the encoder 112 also multiplexes, as shown in Fig. 10, other elementary streams such as a graphics stream and an audio stream, as necessary, into the basic video stream (video elementary stream) in the multiplexing section 122L.

Further, the encoder 112 encodes the left-eye image data (left view video) in the video encoder 121L, thereby generating the basic video stream. The encoder 112 inserts the above-mentioned stream synchronization information (Stream_Synchronization_Information) into the basic video stream in the video encoder 121L. Furthermore, the encoder 112 inserts the above-mentioned stream synchronization information descriptor (Stream_Synchronization_Information_descriptor) into the basic broadcast stream (left view stream). In addition, the container format of the broadcast stream (left view stream) is set as MPEG2 TS.

In addition, the encoder 112 generates the extended broadcast stream (Right view stream: Extended Stream) which has the extended video stream including the right-eye image data. In this case, the encoder 112 multiplexes, as shown in Fig. 10, other elementary streams such as a graphics stream and an audio stream, as necessary, into the extended video stream (video elementary stream) in the multiplexing section 122R.

Further, the encoder 112 encodes the right-eye image data (right view video) in the video encoder 121R, thereby generating the extended video stream. The encoder 112 inserts the above-mentioned stream synchronization information (Stream_Synchronization_Information) into the extended video stream in the video encoder 121R. Furthermore, the encoder 112 inserts the above-mentioned stream synchronization information descriptor (Stream_Synchronization_Information_descriptor) into the extended broadcast stream (right view stream). In addition, the container format of the broadcast stream (right view stream) is set as MPEG2 TS or MP4.

The transmission section 113 RF-modulates the basic broadcast stream (left view stream) which is generated by the encoder 112 into a signal with a predetermined frequency band, and outputs the signal as broadcast waves from an antenna. The transfer server 114 accumulates the extended broadcast stream (right view stream) which is generated by the encoder 112, and performs streaming transmission or download transmission through the IP network in response to a transmission request of the reception side.

The operation of the transmission apparatus 100 shown in Fig. 9 will be described. In the 3D camera 111, an image of a subject is captured, whereby it is possible to obtain the left-eye image data and the right-eye image data as stereoscopic image data. The left-eye image data and the right-eye image data are supplied to the encoder 112. In the encoder 112, each of the left-eye image data and the right-eye image data is encoded in the encoding format such as MPEG2 video or AVC, and the basic video stream including the left-eye image data and the extended video stream including the right-eye image data are generated.

Further, in the encoder 112, the basic video stream including the left-eye image data is provided, and thus the basic broadcast stream (left view stream), of which the container format is MPEG2 TS, is generated. At that time, in the encoder 112, other elementary streams, such as the graphics stream and the audio stream, are multiplexed into the basic video stream (video elementary stream) as necessary.

Further, in the encoder 112, the stream synchronization information (Stream_Synchronization_Information) is inserted into the basic video stream. In this case, the stream synchronization information is inserted into the user data area of the picture header or the area corresponding thereto. Further, in the encoder 112, the stream synchronization information descriptor (Stream_Synchronization_Information_descriptor) is inserted into the basic broadcast stream (left view stream). In this case, the stream synchronization information descriptor is inserted into the load of the video elementary loop of the load of EIT.

As described above, the basic broadcast stream (left view stream), which is generated by the encoder 112, is supplied to the transmission section 113. In the transmission section 113, the broadcast stream (left view stream) is RF-modulated into a signal with a predetermined frequency band, and is output as broadcast waves from an antenna.

Further, in the encoder 112, the extended video stream including the right-eye image data is provided, and thus the extended broadcast stream (Right view stream: Extended Stream), of which the container format is MPEG2 TS or MP4, is generated. At that time, in the encoder 112, other elementary streams, such as the graphics stream and the audio stream, are multiplexed into the extended video stream (video elementary stream) as necessary.

Further, in the encoder 112, the stream synchronization information (Stream_Synchronization_Information) is inserted into the extended video stream. In this case, the stream synchronization information is inserted into the user data area of the picture header or the area corresponding thereto. In addition, in the encoder 112, the stream synchronization information descriptor (Stream_Synchronization_Information_descriptor) is inserted into the extended broadcast stream (right view stream).

The stream synchronization information descriptor is inserted into the load of the video elementary loop when the container format is MPEG2 TS. Alternatively, the stream synchronization information descriptor is inserted as metadata in the uuid (private extension) stored in the MOOV box or the Moof box when the container format is MP4.

As described above, the extended broadcast stream (right view stream), which is generated by the encoder 112, is accumulated in the transfer server 114. In the transfer server 114, the extended broadcast stream is subjected to streaming transmission or download transmission through the IP network in response to the transmission request of the reception side.

### [Configuration Example of Reception Apparatus]

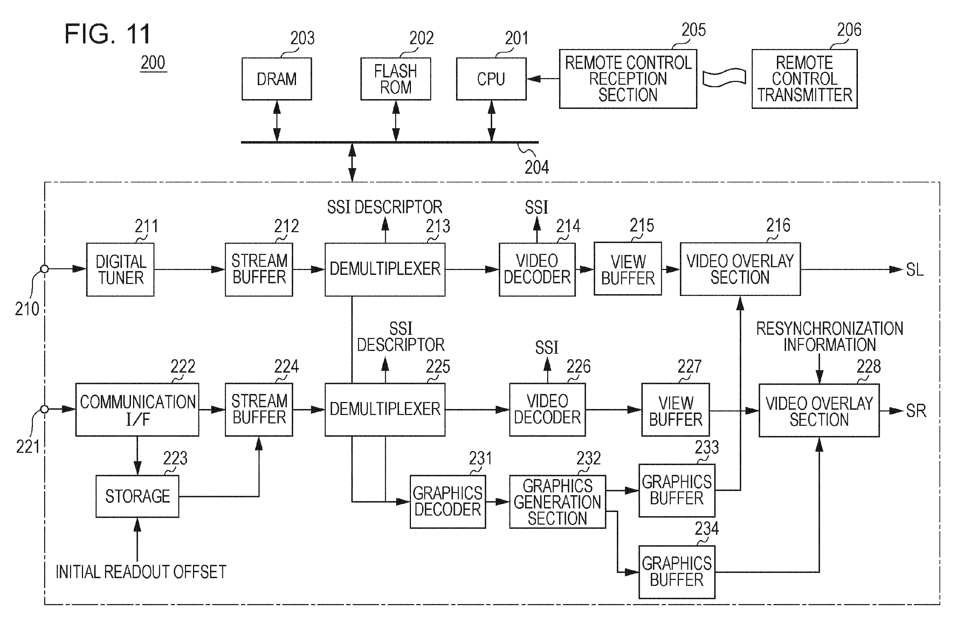

Fig. 11 shows a configuration example of the reception apparatus 200. In addition, an audio system of the reception apparatus 200 is omitted for simplification of description. The reception apparatus 200 has a CPU 201, a flash ROM 202, a DRAM 203, an internal bus 204, a remote control reception section 205, and a remote control transmitter 206. Further, the reception apparatus 200 has an antenna terminal 210, a digital tuner 211, a stream buffer 212, a demultiplexer 213, a video decoder 214, a view buffer 215, and a video overlay section 216.

Furthermore, the reception apparatus 200 has a network terminal 221, a communication interface (communication I/F) 222, and a storage 223 formed of a hard disk drive, a semiconductor memory, or the like. Further, the reception apparatus 200 has a stream buffer 224, a demultiplexer 225, a video decoder 226, a view buffer 227, and a video overlay section 228. In addition, the reception apparatus 200 has a graphics decoder 231, a graphics generation section 232, and graphics buffers 233 and 234.

The CPU 201 controls operations of the respective sections of the reception apparatus 200. The flash ROM 202 stores control software, and retains data. The DRAM 203 constitutes a work area of the CPU 201. The CPU 201 develops the software and the data, which is read out from the flash ROM 202, into the DRAM 203, and activates the software, thereby controlling the respective sections of the reception apparatus 200. The remote control reception section 205 receives a remote control signal (remote control code) which is transmitted from the remote control transmitter 206, and supplies the signal to the CPU 201. The CPU 201 controls, on the basis of the remote control code, the respective sections of the reception apparatus 200. The CPU 201, the flash ROM 202, and the DRAM 203 are connected to the internal bus 204.

The antenna terminal 210 is a terminal for inputting a broadcast signal (RF signal) which is received through a reception antenna (not shown in the drawing). The digital tuner 211 processes the broadcast signal which is input to the antenna terminal 210, and outputs the basic broadcast stream (Left view stream) corresponding to a channel selected by a user. As described above, the container format of the broadcast stream (left view stream) is MPEG2 TS. The stream buffer 212 temporarily stores the basic broadcast stream (left view stream) which is output from the digital tuner 211.

The broadcast stream (left view stream) includes, as described above, the basic video stream (video elementary stream). Further, as described above, as necessary, other elementary streams such as the graphics stream and the audio stream are also multiplexed into the broadcast stream (left view stream). Furthermore, as described above, the stream synchronization information descriptor (Stream_Synchronization_Information_descriptor) is inserted into the broadcast stream (left view stream). The stream synchronization information descriptor includes the initial time stamp information of the basic video stream, the information which indicates the number of other broadcast streams being in a synchronized relationship, the information which indicates whether or not the stream synchronization information is included in the basic video stream, and the like.

The demultiplexer 213 extracts respective elementary streams such as video, graphics, and audio from the basic broadcast stream (left view stream) temporarily stored in the stream buffer 212. Here, the video elementary stream is the basic video stream including the left-eye image data. Further, the demultiplexer 213 extracts the stream synchronization information descriptor from the broadcast stream (left view stream), and sends the descriptor to the CPU 201.

The video decoder 214 obtains the decoded left-eye image data by performing decoding processing on the basic video stream which is extracted by the demultiplexer 213. Further, the video decoder 214 extracts the stream synchronization information (Stream_Synchronization_Information) which is inserted into the user data area of the picture header of the basic video stream and the like, and sends the information to the CPU 201. The stream synchronization information includes the information which indicates the number of frames from the initial frame of the stream, the information which indicates the presence of other broadcast streams being in a synchronized relationship, the information which indicates the type of synchronous display, and the like.

The view buffer 215 temporarily stores the left-eye image data which is obtained by the video decoder 214. The video overlay section (display buffer) 216 overlays data of the graphics information, which is stored in the graphics buffer 233, on the left-eye image data which is stored in the view buffer 215, and outputs left-eye image data SL for display.

The communication interface 222 is connected to the IP network through the network terminal 221. The communication interface 222 receives the extended broadcast stream (right view stream) from the transfer server 114 of the transmission apparatus 100 through the IP network. As described above, the container format of the extended broadcast stream is MPEG2 TS or MP4. Further, as the reception form, there are streaming reception and download reception.

For example, when a schedule for reproducing a 3D program is reserved in accordance with 3D display selection, the communication interface 222 sends the download request of the extended broadcast stream (right view stream) of the program to the transfer server 114, and performs download reception. Further, for example, when the 3D display selection is performed on the 3D program of a current broadcast, the communication interface 222 sends the streaming request of the extended broadcast stream (right view stream) of the program to the transfer server 114, and performs streaming reception.

In addition, at the time of reserving the above-mentioned reproduction, the communication interface 222 sends the streaming request to the transfer server 114 so as to perform streaming at a specified time corresponding to the broadcast time of the program, whereby it is also possible to perform the streaming reception.

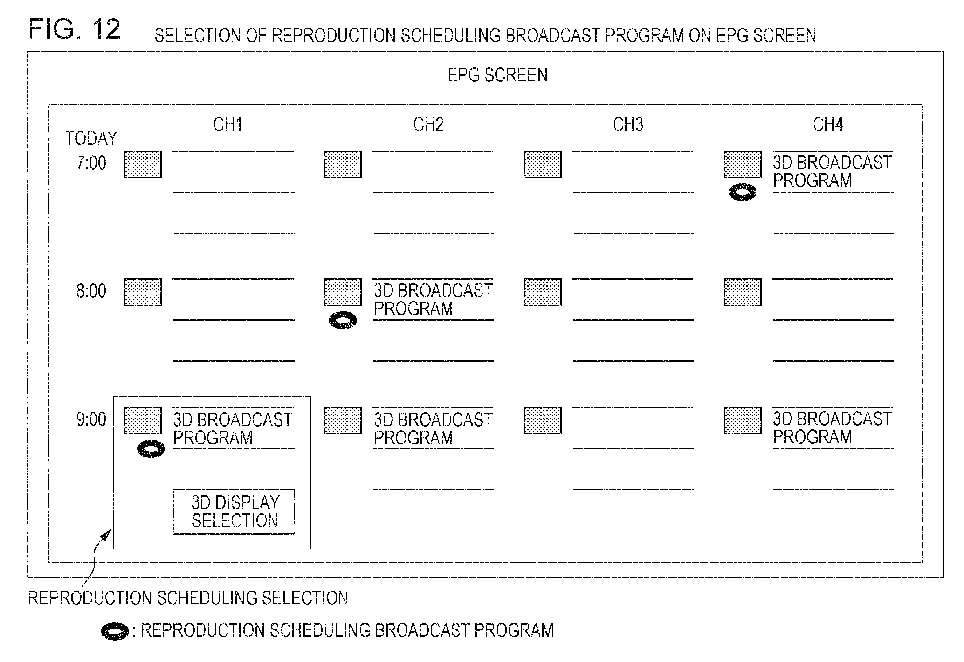

Fig. 12 shows a situation where selection of a reproduction scheduling program on an EPG screen is performed. In this case, when a user selects the 3D program through a program for reserving reproduction on the EPG screen, the 3D display selection button is displayed. By using this button, the user is able to perform 3D display selection. The illustrated example shows a state in which the 3D program from 9:00 of the channel CH1 is selected and the 3D display selection button is displayed.

At the time of requesting the transfer server 114 to perform download or streaming, the communication interface 222 transmits stream mapping information (SMI: Stream Mapping Information) to the IP network. The stream mapping information represents a relationship between the basic broadcast stream (left view stream) and the extended broadcast stream (right view stream). As described above in Fig. 8, the stream mapping information includes the program identifier (Program number), the file name, the stream ID (Transport_Stream_id) of TS, and the like.

In the IP network, in accordance with a supply state of the extended broadcast stream (right view stream), the extended stream is supplied from the router to the reception side. In this case, at a stage where the stream mapping information sent from the reception side reaches up to the router in the network, local presence of the extended broadcast stream is detected, and the extended broadcast stream is supplied from the router to the reception side.

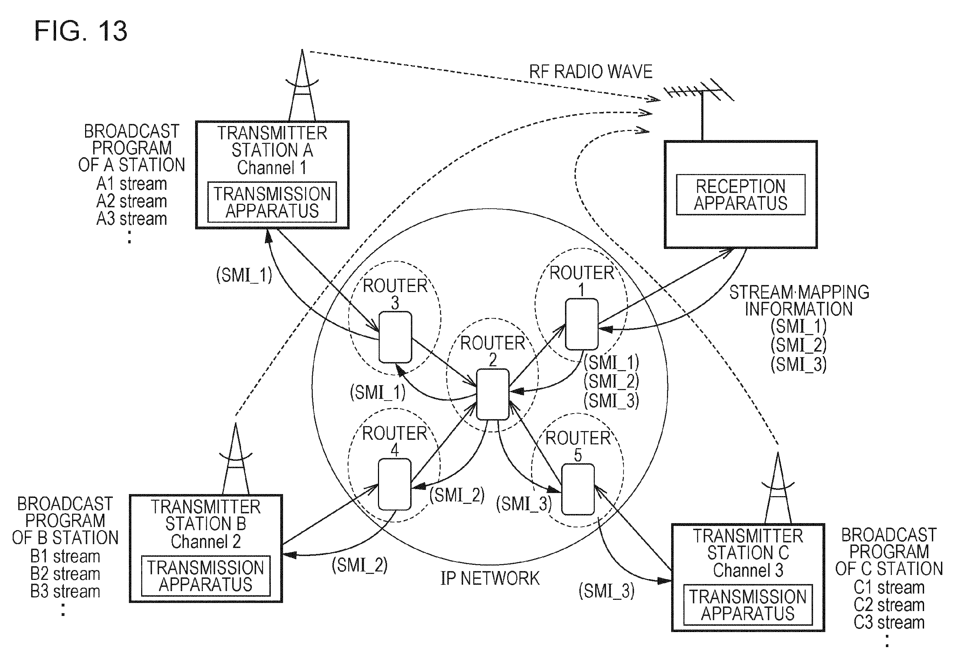

Fig. 13 shows a configuration example of the IP network between the reception side and a transmitting station A (channel 1), a transmitting station B (channel 2), and a transmitting station C (channel 3) which are transmission sides. For example, in this configuration example, when the service request of the extended broadcast stream of the broadcast station A is issued from the reception side, stream mapping information SMI (SMI_1) is sent from the reception side to the router 1. In the router 1, if the presence of the extended broadcast stream is confirmed, then processing of supplying the stream to the reception side is performed.

When presence of the extended broadcast stream is not detected by the router 1, the stream mapping information SMI (SMI_1) is sent to the router 2. In the router 2 as well, processing which is the same as that of the above-mentioned router 1 is performed. When presence of the extended broadcast stream in the router in the path up to the broadcast station A is not confirmed, the stream mapping information SMI (SMI_1) is eventually sent to the transfer server of the broadcast station A, and the extended broadcast stream is supplied from the transfer server to the reception side.

In addition, when a service request of the extended broadcast stream of the broadcast station B or the broadcast station C is issued from the reception side, in the same order mentioned above, the extended broadcast stream is supplied from the transfer server or the router in the path to the reception side. Further, contents of the stream mapping information sent from the reception side may be only the TS stream ID, the program identifier, or the file name.

Returning to Fig. 11, the storage 223 stores and retains the extended broadcast stream (right view stream) which is received through download of the communication interface 222, and reads and outputs the extended broadcast stream in accordance with the broadcast time of the corresponding program. The stream buffer 224 temporarily stores the extended broadcast stream (right view stream) which is received through streaming of the communication interface 222 or is read out from the storage 223.

The demultiplexer 225 extracts respective elementary streams such as video, graphics, and audio from the extended broadcast stream (Right view stream) which is temporarily stored in the stream buffer 224. Here, the video elementary stream is the extended video stream including the right-eye image data. Further, similarly to the above-mentioned demultiplexer 213, the demultiplexer 225 extracts the stream synchronization information descriptor from the broadcast stream (right view stream), and sends the descriptor to the CPU 201.

The video decoder 226 obtains the decoded right-eye image data by performing decoding processing on the extended video stream which is extracted by the demultiplexer 225. Further, similarly to the above-mentioned video decoder 214, the video decoder 226 extracts the stream synchronization information which is inserted into the user data area of the picture header of the extended video stream and the like, and sends the information to the CPU 201.

The view buffer 227 temporarily stores the right-eye image data which is obtained by the video decoder 226. The video overlay section (display buffer) 228 overlays data of the graphics information, which is stored in the graphics buffer 234, on the right-eye image data which is stored in the view buffer 227, and outputs right-eye image data SR for display. In this case, the video overlay section (display buffer) 228 appropriately performs skip processing and output timing correction processing so as to synchronize the right-eye image data with the left-eye image data SL which is output from the above-mentioned video overlay section 216 frame by frame.

The video overlay section (display buffer) 228 performs the processing on the basis of the resynchronization information (display skip information and a display timing correction value) for synchronization supplied from the CPU 201. Here, the video overlay section 228 and the CPU 201 constitute a synchronization management section. A method of synchronizing the basic stream with the extended stream will be described in detail later.

The graphics decoder 231 obtains graphics data (which includes subtitle data) by performing decoding processing on the encoding graphics data which is included in the graphics stream extracted by the demultiplexers 213 and 225. The graphics generation section 232 generates data of graphics information to be respectively overlaid on the left-eye image and the right-eye image, on the basis of the graphics data which is obtained by the graphics decoder 231. The graphics buffers 233 and 234 temporarily store the data of the graphics information to be respectively overlaid on the left-eye image and the right-eye image.

The operation of the reception apparatus 200 will be briefly described. The broadcast signal, which is input to the antenna terminal 210, is supplied to the digital tuner 211. In the digital tuner 211, the broadcast signal is processed, whereby it is possible to obtain the basic broadcast stream (left view stream), of which the container format is MPEG2 TS, corresponding to the channel selected by a user. The broadcast stream is temporarily stored in the stream buffer 212.

In the demultiplexer 213, from the basic broadcast stream (left view stream) which is temporarily stored in the stream buffer 212, the basic streams such as video and graphics are extracted. Further, in the demultiplexer 213, from the broadcast stream (Left view stream), the stream synchronization information descriptor is extracted, and supplied to the CPU 201.

The basic video stream (video elementary stream), which is extracted by the demultiplexer 213, is supplied to the video decoder 214. In the video decoder 214, decoding processing is performed on the encoding image data included in the basic video stream, whereby it is possible to obtain the decoded left-eye image data. The left-eye image data is temporarily stored in the view buffer 215. Further, in the video decoder 214, the stream synchronization information, which is inserted into the user data area of the picture header of the basic video stream and the like, is extracted, and is supplied to the CPU 201.

Further, the graphics stream, which is extracted by the demultiplexer 213, is supplied to the graphics decoder 231. In the graphics decoder 231, decoding processing is performed on the encoding graphics data included in the graphics stream, whereby it is possible to obtain the decoded graphics data (which includes the subtitle data). The graphics data is supplied to the graphics generation section 232.

In the graphics generation section 232, data of graphics information to be overlaid on the left-eye image is generated on the basis of the graphics data which is obtained by the graphics decoder 231. The graphics information data is temporarily stored in the graphics buffer 233. Then, in the video overlay section 216, the graphics information data, which is stored in the graphics buffer 233, is overlaid on the left-eye image data which is stored in the view buffer 215, whereby the left-eye image data SL for display is generated and output.

Further, in the communication interface 222, through the IP network, from the transfer server 114 of the transmission apparatus 100, the extended broadcast stream (right view stream), of which the container format is MPEG2 TS or MP4, is received. The reception form of the extended broadcast stream is download reception or streaming reception.

For example, when a schedule for reproducing the 3D program is reserved in accordance with 3D display selection based on a user operation, the download reception is performed. In this case, the broadcast stream, which is received through the communication interface 222, is written in the storage 223, and is retained until the broadcast time of the program. Further, as for the reception form of the extended broadcast stream, for example, when the 3D display selection is performed on the 3D program of a current broadcast, the streaming reception is performed.

The extended broadcast stream (right view stream), which is subjected to the streaming reception using the communication interface 222 or is read out from the storage 223 in accordance with the broadcast time of the corresponding program, is primarily stored in the stream buffer 224.

In the demultiplexer 225, from the extended broadcast stream (right view stream) which is temporarily stored in the stream buffer 224, the elementary streams such as video and graphics are extracted. Further, in the demultiplexer 225, from the broadcast stream (right view stream), the stream synchronization information descriptor is extracted, and supplied to the CPU 201.

The extended video stream (video elementary stream), which is extracted by the demultiplexer 225, is supplied to the video decoder 226. In the video decoder 226, decoding processing is performed on the encoding image data included in the extended video stream, whereby it is possible to obtain the decoded right-eye image data. The right-eye image data is temporarily stored in the view buffer 227. Further, in the video decoder 226, the stream synchronization information (Stream_Synchronization_Information), which is inserted into the user data area of the picture header of the extended video stream and the like, is extracted, and is supplied to the CPU 201.

Further, the graphics stream, which is extracted by the demultiplexer 225, is supplied to the graphics decoder 231. In the graphics decoder 231, decoding processing is performed on the encoding graphics data included in the graphics stream, whereby it is possible to obtain the decoded graphics data (which includes the subtitle data). The graphics data is supplied to the graphics generation section 232.

In the graphics generation section 232, data of graphics information to be overlaid on the right-eye image is generated on the basis of the graphics data which is obtained by the graphics decoder 231. The graphics information data is temporarily stored in the graphics buffer 234. Then, in the video overlay section 228, the graphics information data, which is stored in the graphics buffer 234, is overlaid on the right-eye image data which is stored in the view buffer 227, whereby the right-eye image data SR for display is generated and output.

In this case, in the video overlay section 228, skip processing and output timing correction processing are appropriately performed, on the basis of the resynchronization information which is supplied from the CPU 201, such that the right-eye image data is synchronized frame by frame with the left-eye image data SL which is output from the above-mentioned video overlay section 216. Thereby, the image signals SL and SR for display, which are output from the video overlay sections 216 and 228, are synchronized frame by frame.

### [Dynamic Stream Switching Including Extended Broadcast Stream]

In the reception apparatus 200 shown in Fig. 11, as described above, the basic broadcast stream and the extended broadcast stream are associated with each other on the basis of the above-mentioned stream mapping information. Hence, it is possible to perform dynamic stream switching including the extended broadcast stream.

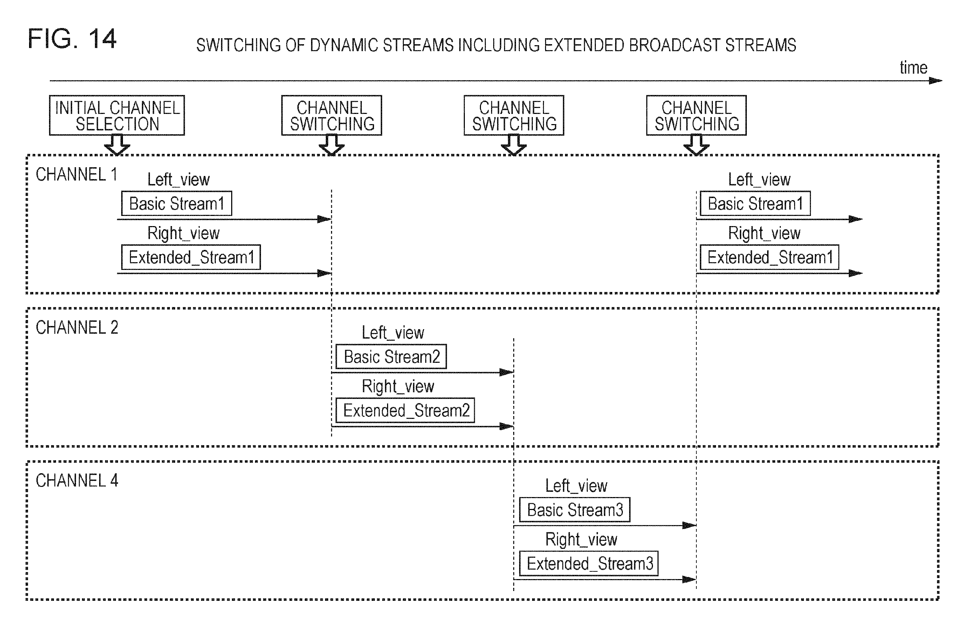

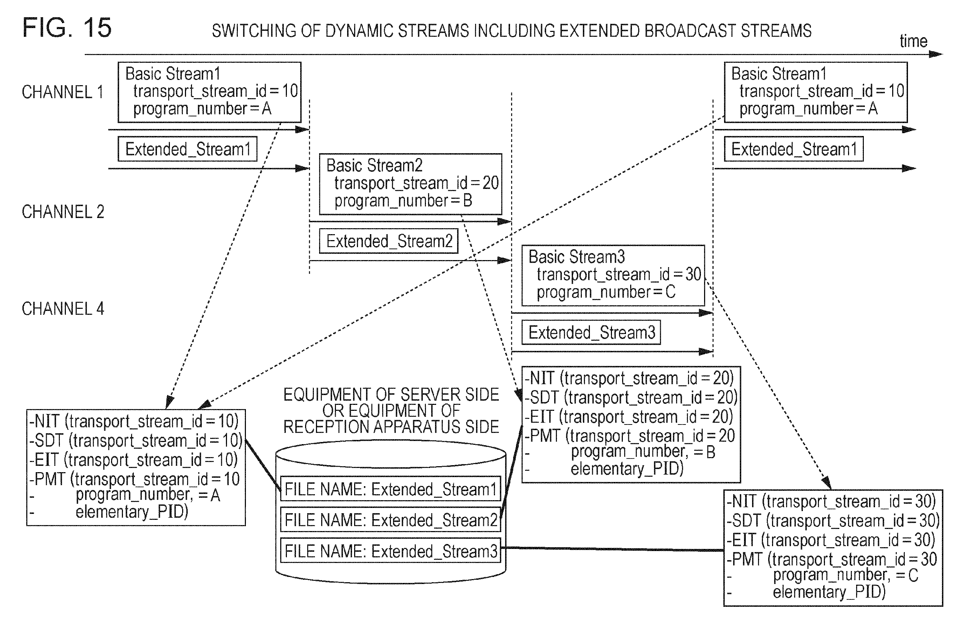

Fig. 14 shows an example of dynamic stream switching. In this example, the channel 1 is selected through initial channel selection. In this case, the 3D program, of which the basic broadcast stream (left view stream) is "Basic Stream 1" and the extended broadcast stream (right view stream) is "Extended_Stream 1", is reproduced. In this case, "Basic Stream 1" is received by using RF radio waves. Further, "Extended_Stream 1" is acquired, as shown in Fig. 15, through streaming reception using the IP network or readout from the storage 223, on the basis of the stream mapping information.

In this state, when the channel is switched into the channel 2, "Basic Stream 2" as the basic broadcast stream (left view stream) is received. In accordance therewith, on the basis of the stream mapping information, "Extended_Stream 2" as the extended broadcast stream (right view stream) is acquired. The acquisition is performed through streaming reception or readout from the storage 223. Although not described, in the following channel switching, dynamic stream switching including the extended broadcast stream is performed in the same manner mentioned above.

### [Structure of Stream Synchronization Information]

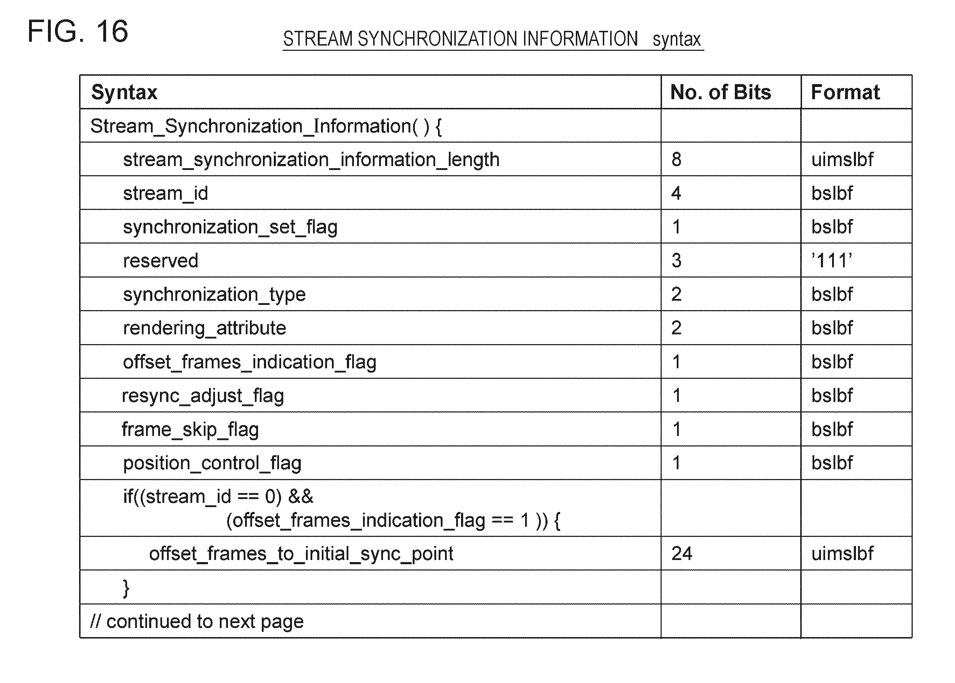

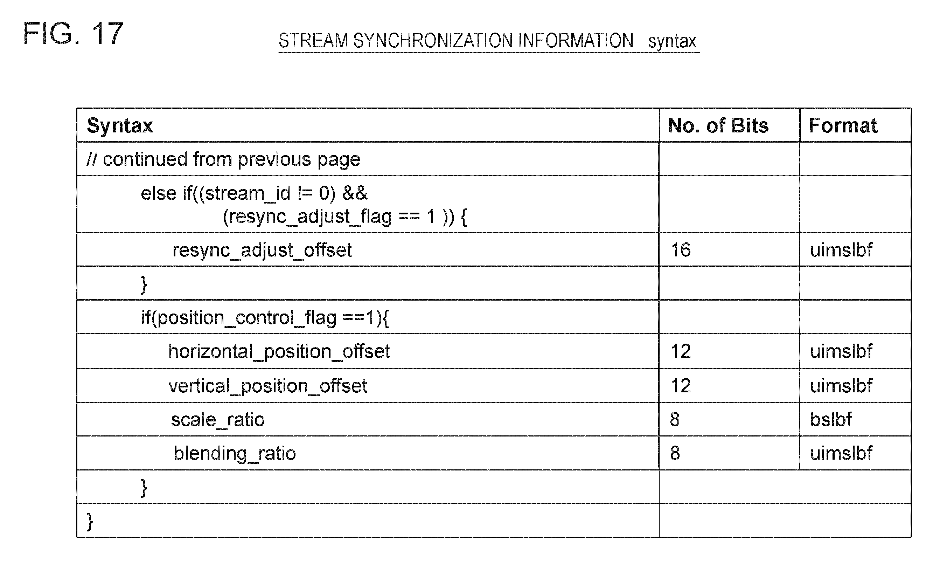

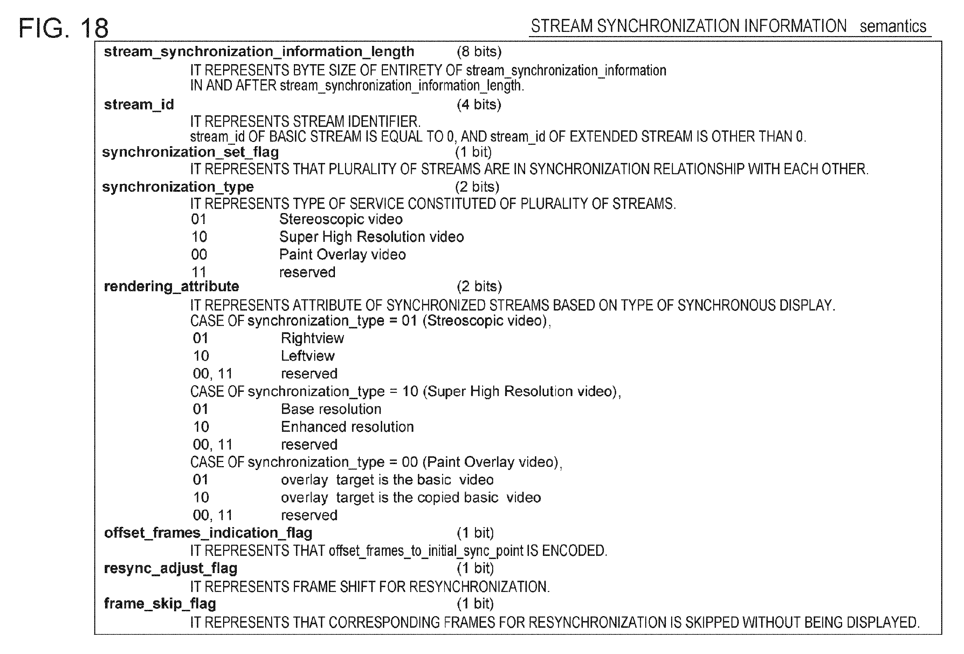

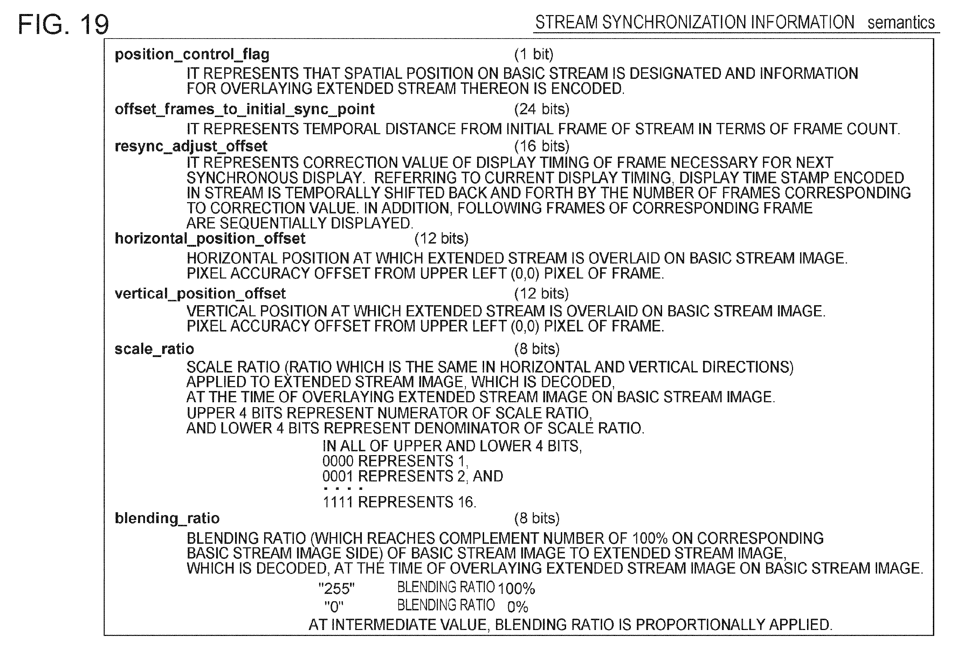

Next, the structure of the stream synchronization information (Stream_Synchronization_Information) will be described. Figs. 16 and 17 show structural examples (Syntax) of the stream synchronization information. Further, Figs. 18 and 19 show contents (Semantics) of principal information in the structural examples.

The 8 bit field of "stream_synchronization_information_length" represents the byte size of the entirety in and after the field. The 4 bit field of "stream id" represents a stream identifier. The "stream id" of the basic stream is set as 0, and the "stream_id" of the extended stream is set to be other than 0.

The 1 bit field of "synchronization_set_flag" is flag information which indicates that the plurality of streams is in synchronized relationship with each other. The 2 bit field of "synchronization_type" represents the type (synchronous display type) of the service formed of the plurality of streams. For example, "01" represents a stereoscopic image (Stereoscopic video), "10" represents an ultra-high-definition image (Super High resolution video), "00" represents an overlay image (Paint Overlay video).

The 2 bit field of "rendering_attribute" represents the attribute of synchronized streams based on the synchronous display type. For example, in the case of "synchronization_type=01", "01" represents a right-eye image (Right view), and "10" represents a left-eye image (Left view). Further, for example, in the case of "synchronization_type=10", "01" represents a basic resolution image (Base resolution), "10" represents an enhanced resolution image (Enhanced resolution). Further, for example, in the case of "synchronization_type=00", "01" indicates that an image of the overlay target (overlay target) is the basic stream image (Base video), and "10" indicates that an image of the overlay target (overlay target) is a copy of the basic stream image (Base video).

The "offset_frames_indication_flag" is flag information which indicates that "offset_frames_to_initial_sync_point" indicating the temporal distance from the initial frame of the stream is encoded. The 1 bit field of "resync_adjust_flag" is flag information which indicates a frame shift for resynchronization. The 1 bit field of "frame_skip_flag" is flag information which indicates that the corresponding frame for resynchronization is skipped without being displayed. The 1 bit field of "position_control_flag" is flag information which indicates that a spatial position on the basic stream is designated and information for overlaying the extended stream thereon is encoded.

The 24 bit field of "offset_frames_to_initial_sync_point" represents, as described above, the temporal distance from the initial frame of the stream. The information is present when the "stream_id" is 0, that is, the stream is the basic stream and the "offset_frames_indication_flag" is 1.

The 16 bit field of "resync_adjust_offset" represents a correction value at the display timing of the frame as a target of the request of the next synchronous display. The display time stamp encoded in the stream is temporarily shifted back and forth by the number of frames corresponding to the correction value on the basis of the current display timing. In addition, the following frames of the corresponding frame are sequentially displayed. The information is present when the "stream_id" is not 0, that is, the stream is the extended stream and the "resync_adjust_flag" is 1.

The 12 bit field of "horizontal_position_offset" is a horizontal position at which the extended stream is overlaid. The information is a pixel accuracy offset value from the upper left (0, 0) pixel of the frame. The 12 bit field of "vertical_position_offset" is a vertical position at which the extended stream is overlaid. The information is a pixel accuracy offset value from the upper left (0, 0) pixel of the frame.

The 8 bit field of "scale_ratio" indicates a scale ratio (ratio which is the same in horizontal and vertical directions) applied to the extended stream image, which is decoded, at the time of overlaying the extended stream image on the basic stream image. The upper 4 bits represent a numerator of the scale ratio, and the lower 4 bits represent a denominator of the scale ratio. In all of upper and lower 4 bits, 0000 represents 1, 0001 represents 2, and 1111 represents 16. Accordingly, "0010 0011" indicates that the scale ratio is 3/4.

The 8 bit field of "blending_ratio" represents a blending ratio of the basic stream images to the extended stream image, which is decoded, at the time of overlaying the extended stream image on the basic stream image. For example, at "255", the blending ratio is 100%, at "0", the blending ratio is 0%, and at the intermediate value, the blending ratio is proportionally applied. In this case, the blending ratio on the side of the basic stream image as an overlay target is set as a complement number of 100%.

Each item of information of "horizontal_position_offset", "vertical_position_offset", and "scale_ratio", "blending_ratio" mentioned above is present when "position_control_flag" is 1.

### [Structure of Stream Synchronization Information Descriptor]

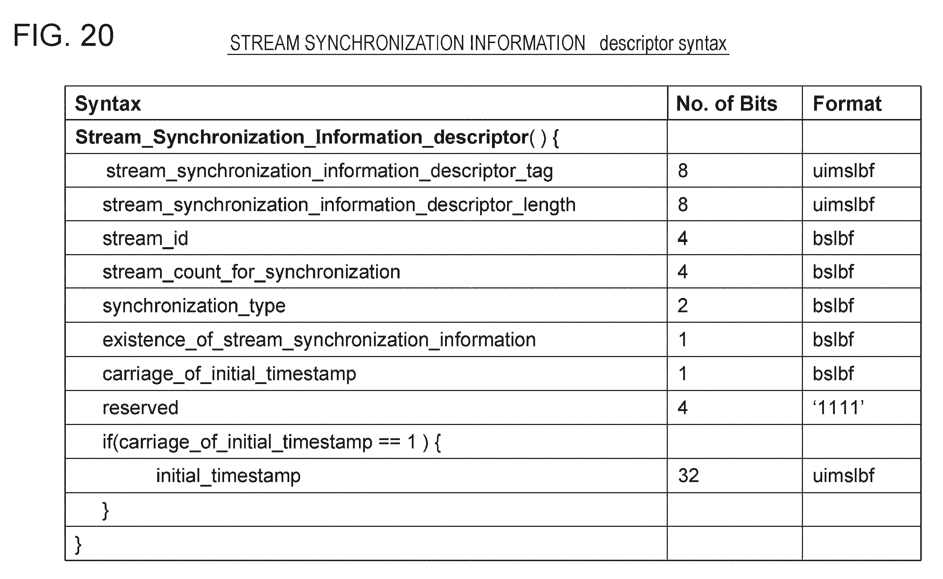

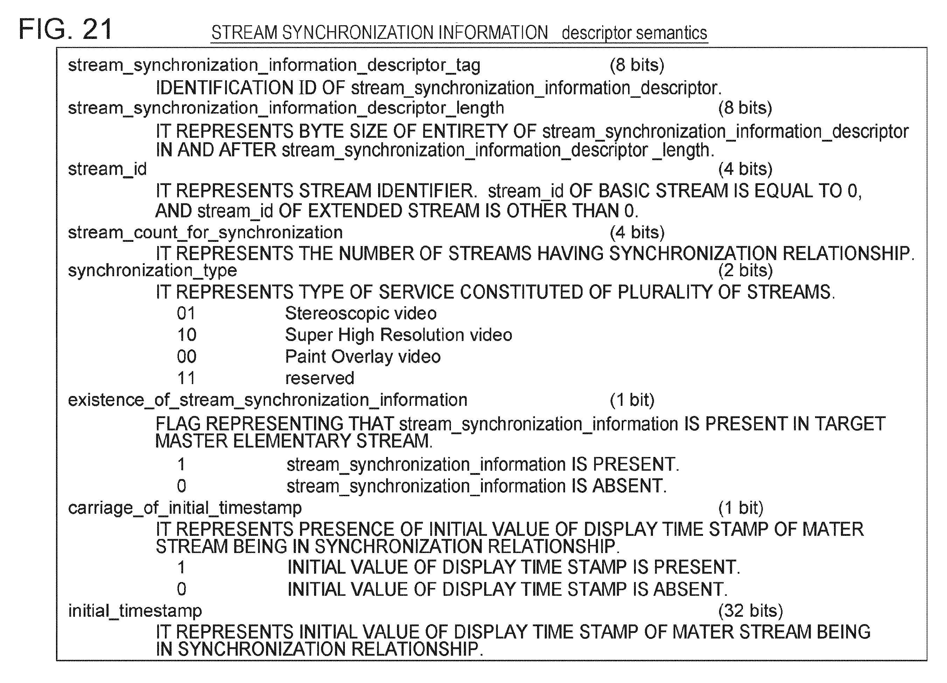

Next, the stream synchronization information descriptor (Stream_Synchronization_Information_descriptor) will be described. Fig. 20 shows a structural example (Syntax) of the stream synchronization information descriptor. Further, Fig. 21 shows contents (Semantics) of principal information in the structural example.

The 8 bit field of "stream_synchronization_information_descriptor_tag" represents that the descriptor is "Stream_Synchronization_Information_descriptor". The 8 bit field of "stream_synchronization_information- descriptor_length" represents the byte size of the entirety in and after the field. The 4 bit field of "stream_id" represents a stream identifier. The "stream_id" of the basic stream is set as 0, and the "stream id" of the extended stream is set to be other than 0.

The 4 bit field of "stream_count_for_synchronization" represents the number of streams having a synchronized relationship. The 2 bit field of "synchronization_type" represents the type (synchronous display type) of a service constituting the plurality of streams. For example, "01" represents a stereoscopic image (Stereoscopic video), "10" represents an ultra-high-definition image (Super High resolution video), "00" represents an overlay image (Paint Overlay video).

The "existence_of_stream_synchronization_information" is flag information which indicates that the stream synchronization information is present in the target elementary stream. Here, "1" indicates the presence thereof, and "0" indicates the absence thereof.

The 1 bit field of "carriage_of_initial_timestamp" is presence of the initial value of the display time stamp of the mater stream being in synchronized relationship. Here, "1" indicates the presence thereof, and "0" indicates the absence thereof. The 32 bit field of "initial_timestamp" represents the initial value of the display time stamp with an accuracy of 90 kHz of the mater stream being in synchronized relationship. The information is present when "carriage_of_initial_timestamp" is 1.

### [Method of Synchronizing Basic Stream with Extended Stream]

Next, a specific method of synchronizing the basic stream with the extended stream will be described. The fundamentals of the synchronization method in the present technology are as follows. That is, management of a synchronization time period enables the basic stream and the extended stream to be synchronously displayed frame by frame with reference to the information of the linear broadcast of the basic stream. Further, when the basic stream and the extended stream are respectively edited to be separately inserted into original contents, it is enabled to control the synchronization of display of two streams on the reproduction side.

Further, the unit and the means of the synchronization are as follows. (1) The method of synchronizing the plurality of streams is based on the typical type time stamp. (2) When the time stamp are not provided in the respective frames, interpolation is performed on a value between two time stamps from a value of a regular frame period on the reception side so as to thereby be able to inspect the time stamp for each frame. (3) A synchronization master (normal basic stream) at the time of reproduction is recognized, and is set as a reference source of the synchronous display of the plurality of pictures.

(4) When the initial time information of the basic stream and the initial time information of the extended stream during the synchronous display are not the same values, the difference in the initial time information at the time stamp on the extended stream side is calculated as an offset at the time of reproduction, and then the synchronization management is performed. In addition, the above-mentioned initial time information sets are initial PCR values in the same interval if PCR (Program Clock Reference) is present in the stream.

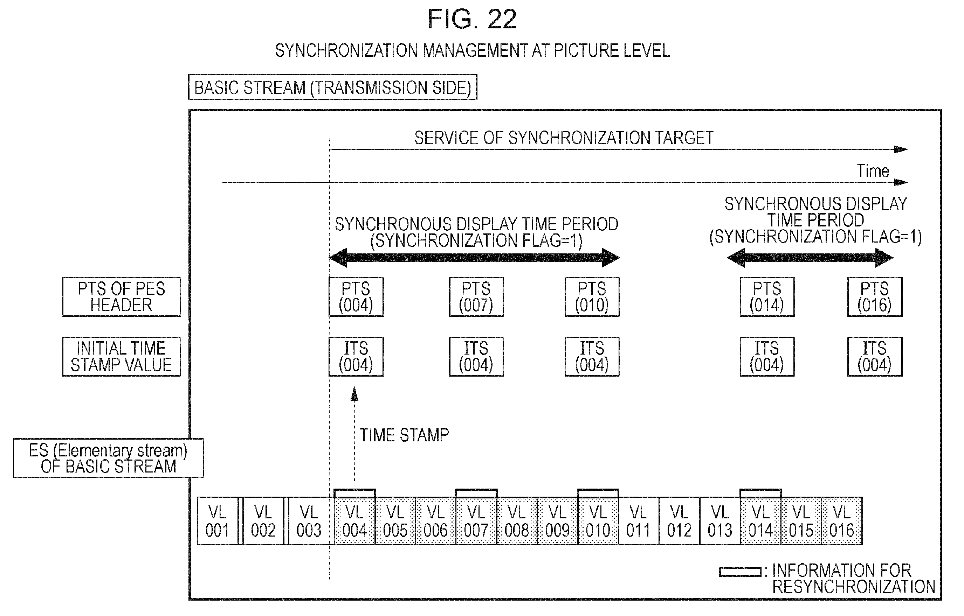

Next, a description will be given of transmission of the initial values of time information for synchronization in the present technology. In the present technology, the time stamp initial value of the basic stream in the program for performing synchronization service is transmitted (refer to "initial_timestamp" of Fig. 20). In this case, on the transmission side, as shown in Fig. 22, the values of the initial time stamp of the basic stream in the time period for performing synchronous display is transmitted as a reference of offsets for synchronization. In addition, in Fig. 22, "synchronization flag" corresponds to "synchronization_set_flag" in the stream synchronization information (stream_synchronization_information) shown in Fig. 16.

On the reception side, at the time of reproducing the basic stream from an arbitrary time, by calculating the difference between the initial time stamp and the time stamp (PTS) which indicates the display time of the corresponding frame, it is possible to know the time passage of the time period for synchronization. In addition, the extended stream corresponding to the offset time from the initial time stamp value is skipped by an initial readout offset value and is read out, and the corresponding frame is displayed, whereby it is possible to perform synchronous display of the basic stream and the extended stream.

The initial time stamp value may be transmitted, as described above, to a stream position different from the existing PES header (PES header), in a format of PTS as a descriptor (descriptor) of a system layer. In the embodiment, as described above, stream synchronization information descriptors (Stream_Synchronization_Information_descriptor), each of which has the initial time stamp value, is inserted into the video elementary loop and the like.

In addition, the frame offset value from the initial value on a video picture basis may be transmitted to a position corresponding to video random access. The frame offset value corresponds to "offset frames to initial sync point" in the stream synchronization information (stream_synchronization_information) shown in Fig. 16.

The offset readout of the extended stream on the reception side will be described. (1) A description is given of a case where the extended stream is supplied through streaming. In this case, the reproduction side (reception side) sends a request signal, which includes a readout offset value, to the transmission side server (transfer server) through a predetermined network protocol. On the other hand, the transmission side server starts streaming transmission from a location corresponding to the picture shifted by an amount of the readout offset.

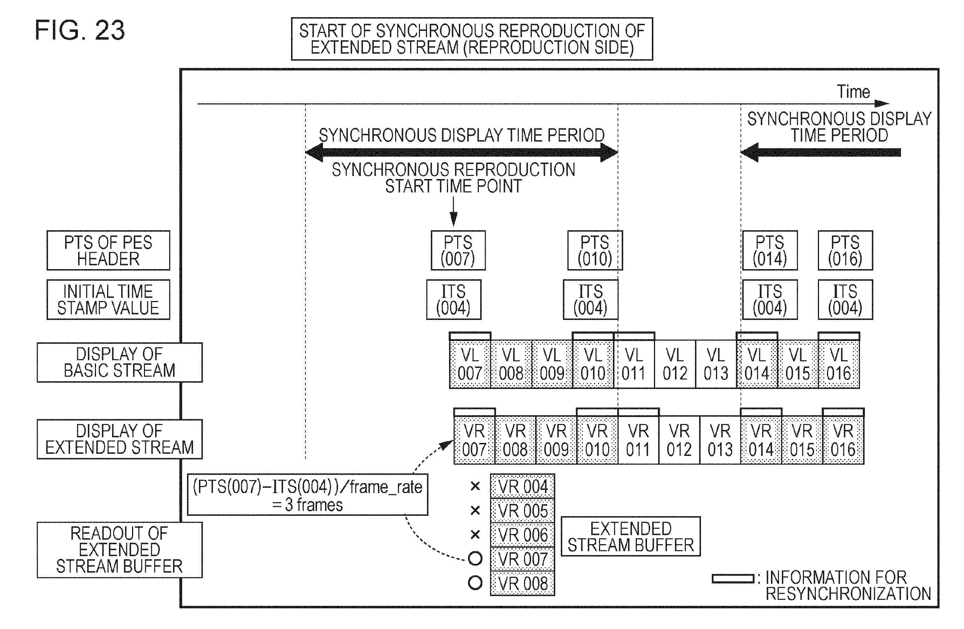

(2) A description is given of a case where the extended stream is supplied in advance through download. In this case, the extended stream is present as a file on the reception side. Hence, as shown in Fig. 23, in consideration of the frame offset amount which is obtained by converting the difference between the display time stamp and initial time stamp values of the basic stream into the frame period, the buffer is read out, and display is performed. In addition, in Fig. 23, "(PTS(007)-ITS (004))/frame_rate = 3 frames" represents an example of a conversion expression. Further, in Fig. 23, "extended stream buffer" corresponds to the storage 223 in the reception apparatus 200 of Fig. 11.

At the time of downloading or streaming the extended stream, until the stream is read out from the storage 223 and is decoded and a display image thereof is obtained, or until the stream is received from a server in the network and is decoded and a display image thereof is obtained, a delay time occurs. Accordingly, by appropriately performing time alignment corresponding to the delay time on the display of the basic stream, display synchronization between the basic stream and the extended stream is guaranteed.

Next, a description will be given of transmission of the synchronization correction information in the present technology. Among original left and right video contents constituting a stereoscopic image view, one may be supplied through linear broadcast waves, and the other may be supplied through IP transfer. In this case, streams may be separately edited depending on the respective supply methods.

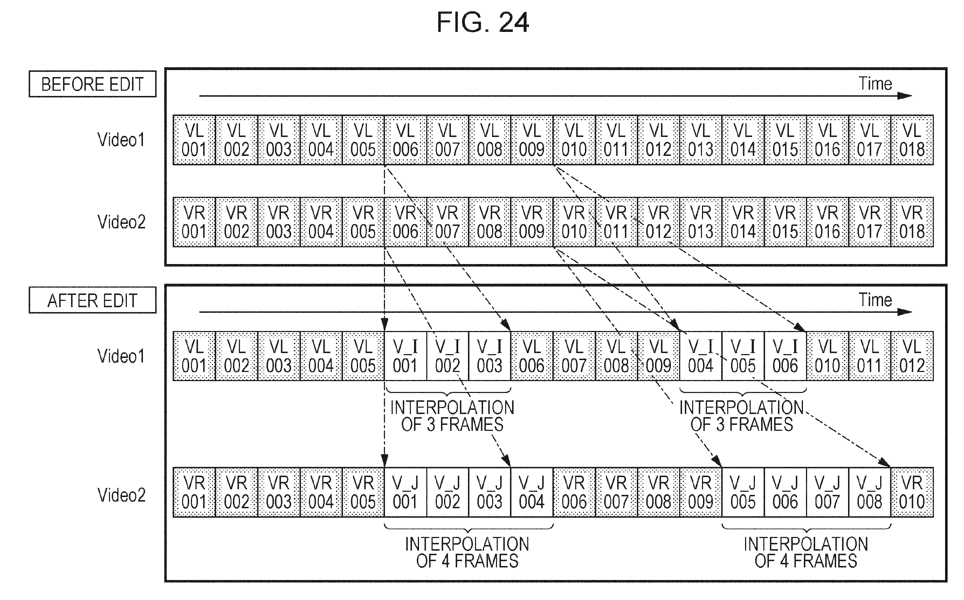

Fig. 24 shows an example of edit of the basic stream (Video1), which includes the left-eye image data, and the extended stream (Video2) which includes the right-eye image data. In a case of the example, in the basic frame (Video1), between frames "VL005" and "VL006" which were adjacent to each other before the edit, three frames "V I001" to "V I003" are inserted after the edit. Further, in the basic frame (Video1), between frames "VL009" and "VL010" which were adjacent to each other before the edit, three frames "V I004" to "V I006" are inserted after the edit.

Further, in a case of the example, in the basic frame (Video2), between frames "VR005" and "VR006" which were adjacent to each other before the edit, four frames of frames "V_J001" to "V_J004" are inserted after the edit. Further, in the basic frame (Video2), between frames "VR009" and "VR010" which were adjacent to each other before the edit, four frames of frames "V_J005" to "V_J008" are inserted after the edit.

On the reception side, when only the broadcast waves are used for viewing display, or when only the IP transfer is used for viewing display, there is no trouble if the respective streams are separately used for viewing display. However, when the stream with the broadcast waves and the stream with the IP transfer are displayed at the same time such that 3D display is viewed, it is necessary for the respective streams to be synchronously displayed frame by frame.

On the transmission side (encoder side), in order to correct out-of-synchronization caused by the edit operations between the basic stream and the extended stream on the stream reproduction side, correction offsets for resynchronization and display skip flags for resynchronization are set as information for resynchronization in the extended stream. Here, when the number of frames in the edit part is different between the basic stream and the extended stream, the correction offset for resynchronization are set as the difference therebetween.

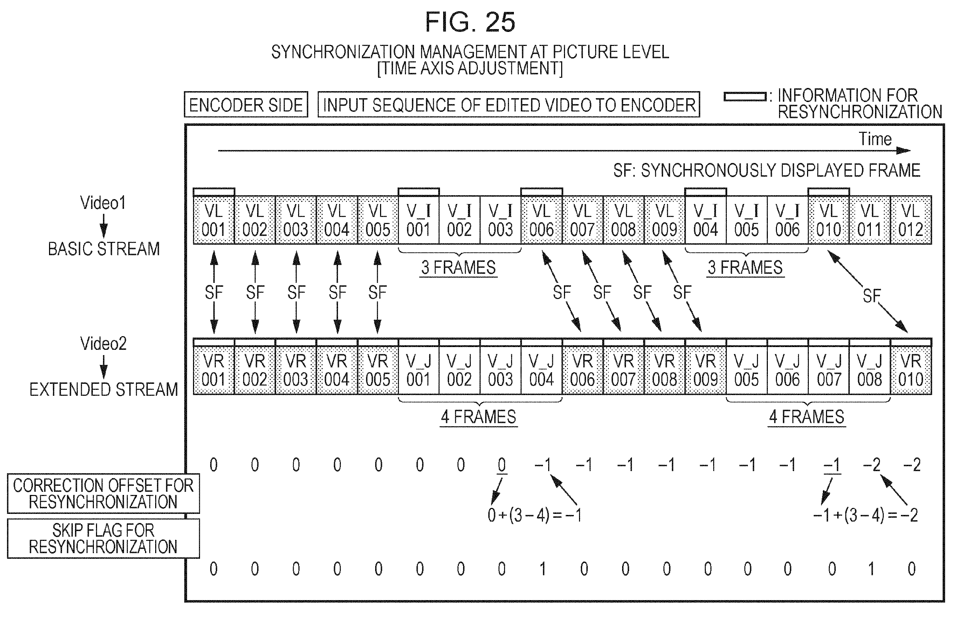

Fig. 25 shows a setting example of the correction offsets for resynchronization and the display skip flags for resynchronization corresponding to the above-mentioned edit example of Fig. 24. In this case, in the basic frame (Video1), three frames of "V_I001" to "V_1003" are inserted between "VL005" and "VL006". On the other hand, in the extended stream (Video2), four frames of "V_J001" to "V_J004" are inserted between "VR005" and "VR006". Hence, in accordance with this edit, it is necessary for the correction offset for resynchronization in the extended frame to be "0+(3-4)=-1", and thus the offset is set in following frames from "V_J004".

Then, since a value of the correction offset for resynchronization is "-1", "VR006" as a resynchronization start frame is shifted forward by one frame in the display order. Hence, the corresponding skip flag for resynchronization in the extended frame are set to "1" such that display of "V_J004" previous by one frame to "VR006" is skipped.

Further, in this case, in the basic frame (Video1), three frames of "V_I004" to "V_I006" are inserted between "VL009" and "VL010". On the other hand, in the extended stream (Video2), four frames of "V_J005" to "V_J008" are inserted between "VR009" and "VR010". Hence, in accordance with this edit, it is necessary for the correction offset for resynchronization in the extended frame to be "-1+(3-4)=-2", and thus the offset is set in following frames from "V_J008".

Then, since a value of the correction offset for resynchronization is "-2", "VR010" as a resynchronization start frame is shifted forward by two frames in the display order. In the interval from "V_J007" to "V_J008", the value of the correction offset for resynchronization is changed from "-1" to "-2", and the value of the change "1" indicates the number of frames to be skipped for resynchronization. Here, the value of the change indicates that it is necessary to perform the frame skip on "V_J008" corresponding to one frame. Hence, the corresponding skip flag for resynchronization in the extended frame are set to "1" such that display of "V_J008" previous by one frame to "VR010" is skipped.

In addition, the correction offset for resynchronization corresponds to "resync_adjust_offset" in the stream synchronization information (stream_synchronization_information) shown in Fig. 16. Further, the skip flag for resynchronization corresponds to "frame_skip_flag" in the stream synchronization information (stream_synchronization_information) shown in Fig. 16.

On the reception side (decoder side), by using the skip flags for resynchronization and the correction offsets for resynchronization, display of frames, which are not synchronously displayed in the extended stream, is skipped, and the display timing of frames, which are synchronously displayed, is corrected. This correction is performed, for example, as described above, in the video overlay section 228 of the reception apparatus 200 of Fig. 11.

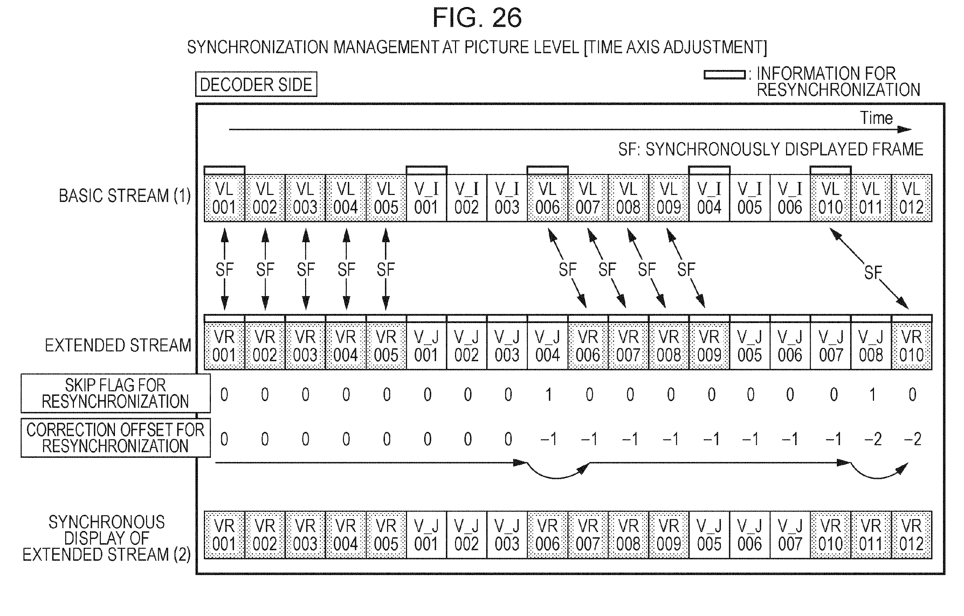

Fig. 26 shows a correction example of the display timing on the reception side in a case where the correction offsets for resynchronization and the display skip flags for resynchronization are set on the transmission side (encoder side) as described above in Fig. 25. In this case, at the frame of "V_J004" in the extended stream, the skip flag for resynchronization is "1", and thus display of this frame is skipped. Further, the correction offsets for resynchronization of the following frames from "V_J006" are "-1", and thus display of the following frames is shifted forward by one frame.

Further, in this case, at the frame of "V J008" in the extended stream, the skip flag for resynchronization is "1", and thus display of this frame is skipped. Further, the correction offsets for resynchronization of the following frames from "V_J010" are "-2", and thus display of the following frames is shifted forward by two frames. Accordingly, synchronous display of the basic stream (left-eye image data) and the extended stream (right-eye image data) are satisfactorily performed.

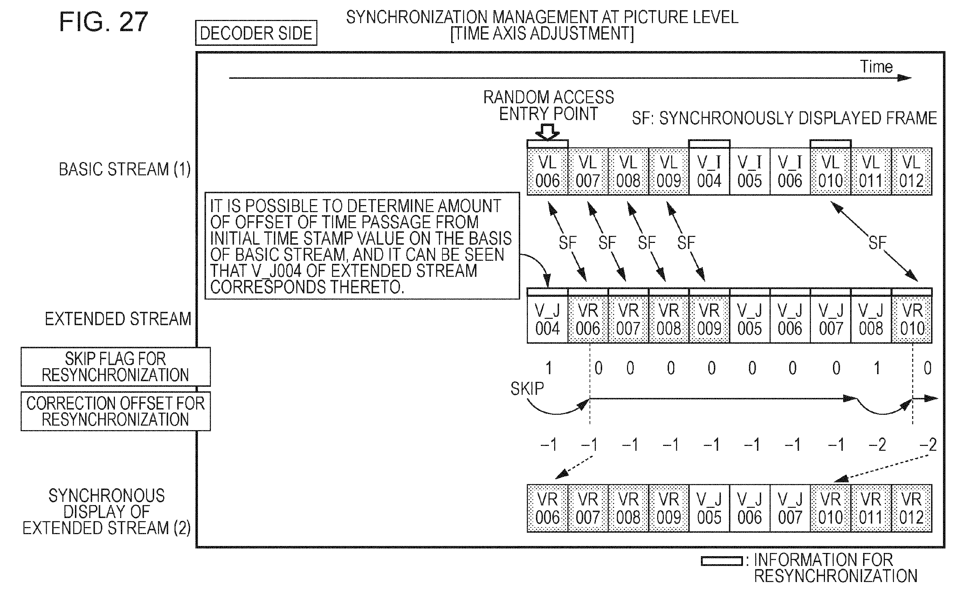

Fig. 27 shows a correction example of display timing at the time of video random access. In this case, the reproduction (display) start frame of the extended stream is determined, as described above, for example, on the basis of the difference between the display time stamp and initial time stamp values of the basic stream. Hence, as shown in the drawing, it can be seen that, when the random access entry point of the basic stream is "VL006", the reproduction (display) start frame of the extended stream is "V_J004".

At the time of the video random access, display timing is also corrected as described above. For example, at the frame of "V_J004" of the extended stream, the skip flag for resynchronization is "1", and thus display of this frame is skipped. Further, the correction offsets for resynchronization of the following frames from "V_J006" are "-1", and thus display of the following frames is shifted forward by one frame. Accordingly, synchronous display of the basic stream (left-eye image data) and the extended stream (right-eye image data) are satisfactorily performed.

In addition, in the description of the above-mentioned method of synchronizing the basic stream with the extended stream, it is assumed that the container format of the extended stream is MPEG2 TS. Although detailed description thereof is omitted, it is the same for the case where the container format of the extended stream is MP4.

However, in MOOV which is aggregation of header information of MP4, STTS (Decoding Time To Sample) and CTTS (Composition Time To Sample) as time information are encoded. Here, STTS represents a decoding time (a difference value from the initial value of the MP4 file). CTTS represents an offset of display timing for a value indicating the decoding time which is represented by STTS. In addition, in MP4, PCR (Program Clock Reference) is absent, but still the start point of the file is set to 0.

In addition, in the above description of the reception apparatus 200, in the synchronization processing, there are the stream synchronization information descriptor (SSI descriptor) and the stream synchronization information (SSI). However, when such information is absent, the reception apparatus 200 performs synchronization processing with reference to the time stamp.

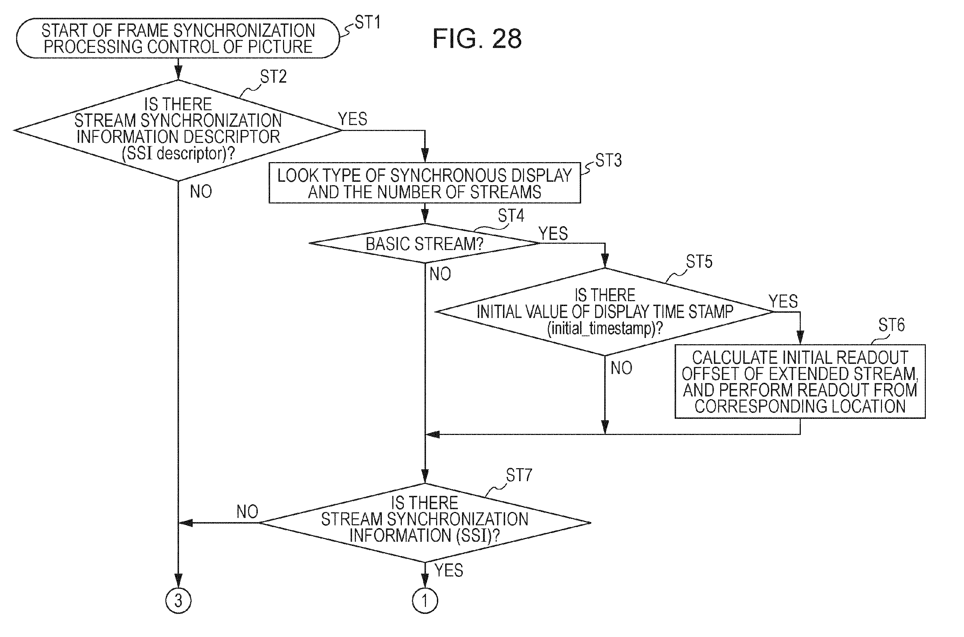

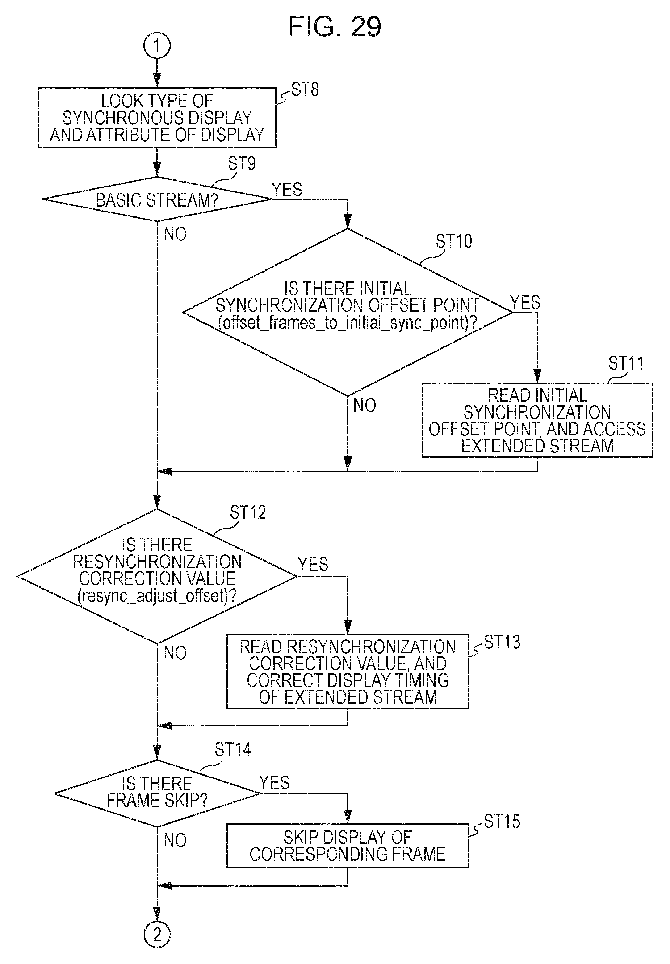

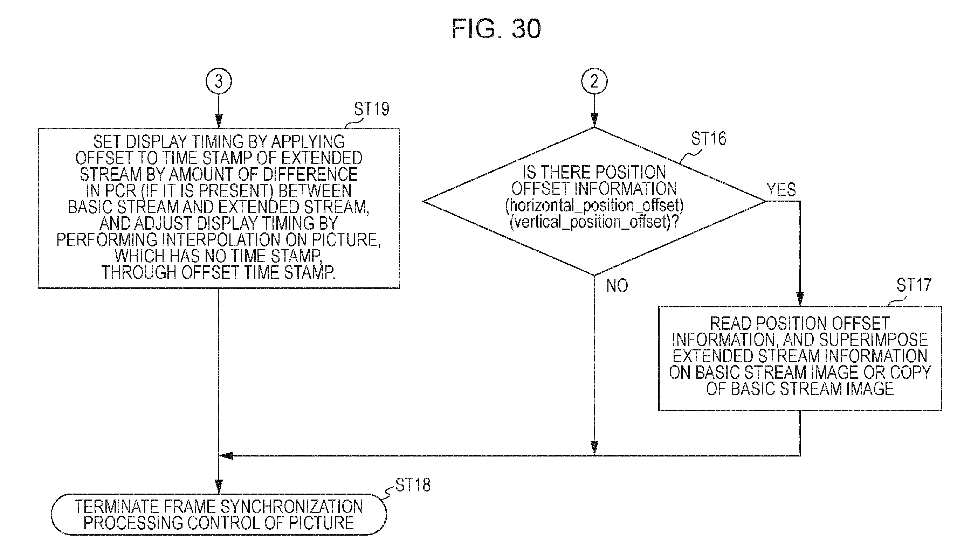

The flowcharts of Figs. 28 to 30 show an example of a sequence of the synchronization processing control in the CPU 201. In addition, in this example, the synchronous display type is generalized to be compatible with not only the synchronous display of the stereoscopic image (Stereoscopic video) but also other synchronous display of a high-definition image (Super High resolution video), an overlay image (Paint Overlay video), and the like.

In step ST1, the CPU 201 starts the synchronization processing control. Next, in step ST2, the CPU 201 determines whether or not the stream synchronization information descriptor (SSI descriptor shown in Fig. 20) is present.

When the stream synchronization information descriptor is present, in step ST3, the CPU 201 recognizes "synchronization_type" as the synchronous display type, and recognizes "stream_count_for_synchronization" as the number of streams. Then, in step ST4, the CPU 201 determines whether or not the current stream is the basic stream on the basis of the information of "stream_id". If the current stream is the basic stream, in step ST5, the CPU 201 determines, on the basis of "carriage_of_initial_timestamp", whether or not the initial value of the display time stamp (initial time stamp value) "initial_timestamp" is present.

If the initial value of the display time stamp is present, in step ST6, the CPU 201 calculates the initial readout offset of the extended stream, and controls readout from the corresponding location. Thereafter, the CPU 201 advances to processing of step ST7. If the current stream is not the basic stream in step ST4, or if the initial value of the display time stamp is absent in step ST5, the CPU 201 immediately advances to the processing of step ST7.

In step ST7, the CPU 201 determines whether or not the stream synchronization information (SSI shown in Figs. 16 and 17) is present. If the stream synchronization information is present, the CPU 201 advances to processing of step ST8. In step ST8, the CPU 201 recognizes "synchronization_type" as the synchronous display type, and recognizes "rendering_attribute" as the attribute of the display. Then, in step ST9, the CPU 201 determines whether or not the current stream is the basic stream on the basis of the information of "stream id".

If the current stream is the basic stream, in step ST10, the CPU 201 determines, on the basis of information of "offset_frames_indication_flag", whether or not the initial synchronization offset point "offset_frames_to_initial_sync_point" is present. If the initial synchronization offset point is present, in step ST11, the CPU 201 reads the initial synchronization offset point, and accesses the extended stream. Thereafter, the CPU 201 advances to processing of step ST12. If the current stream is not the basic stream in step ST9, or if the initial synchronization offset point is absent in step ST10, the CPU 201 immediately advances to the processing of step ST12.

In step ST12, the CPU 201 determines, on the basis of information of "resync_adjust_flag", whether or not the resynchronization correction value (correction offset for resynchronization) "resync_adjust_offset" is present. If the resynchronization correction value is present, in step ST13, the CPU 201 reads the resynchronization correction value, and performs control such that the display timing of the extended stream is corrected. Thereafter, the CPU 201 advances to processing of step ST14. If the resynchronization correction value is not present in step ST12, the CPU 201 immediately advances to the processing of step ST14.

In step 14, the CPU 201 determines whether or not the frame skip is present on the basis of the information of "frame_skip_flag". If the frame skip is present, in step ST15, the CPU 201 controls such that display of the corresponding frame is skipped. Thereafter, the CPU 201 advances to processing of step ST16. If the frame skip is absent in step ST14, the CPU 201 immediately advances to the processing of step ST16.

In step ST16, the CPU 201 determines whether or not the position offset information sets "horizontal_position_offset" and "vertical_position_offset" are present. It is determined whether or not the information of "position_control_flag" is present. If the position offset information is present, in step ST17, the CPU 201 reads the horizontal and vertical position offset information sets, and performs control so as to overlay the extended stream image on the basic stream or an image of a copy of the basic stream by performing processing which is based on "scale_ratio" and "blending_ratio". Thereafter, in step ST18, the CPU 201 terminates the synchronization processing control. If the position offset information is absent in step ST16, in step ST18, the CPU 201 immediately terminates the synchronization processing control.

Further, if the stream synchronization information descriptor (SSI descriptor) is absent in step ST2 mentioned above, or if the stream synchronization information (SSI) is absent in step ST7, in step ST19, the CPU 201 controls the synchronization processing with reference to the time stamp.

That is, in step ST19, the CPU 201 sets the display timing by applying the offsets to the time stamps of the extended stream by a difference in PCR (if it is present) between the basic stream and the extended stream. Further, in a case of a picture which has no time stamp, the CPU 201 adjusts the display timing by performing interpolation through the offset time stamps. Thereafter, in step ST18, the CPU 201 terminates the synchronization processing control.

As described above, in the broadcast system 10 shown in Fig. 1, it is possible to transmit the basic broadcast stream from the transmission side to the reception side through RF radio waves, and thus it is possible to transmit the extended broadcast stream through the IP network. Hence, on the reception side, it is possible to display, at a high resolution, a stereoscopic image based on the left-eye image data and the right-eye image data.

Further, in the broadcast system 10 shown in Fig. 1, the stream synchronization information (Stream_Synchronization_Information) is inserted into the video stream which is sent from the transmission side to the reception side. The stream synchronization information includes information for synchronizing the video stream frame by frame on the reception side. Hence, on the reception side, it is possible to perform the synchronous display based on the left-eye image data and the right-eye image data. Thus, even when the left-eye image data and the right-eye image data are transmitted through broadcast streams with separate paths, it is possible to satisfactorily display the stereoscopic image.

Further, in the broadcast system 10 shown in Fig. 1, the stream synchronization information descriptor (Stream_Synchronization_Information_descriptor) is inserted into the broadcast stream which is sent from the transmission side to the reception side. The stream synchronization information descriptor includes initial time stamp information of the basic video stream. Hence, on the reception side, at the time of reproducing the basic stream from an arbitrary time, it is possible to easily display the frame corresponding to the extended frame.

Further, in the broadcast system 10 shown in Fig. 1, the stream synchronization information (Stream_Synchronization_Information) is inserted into the video stream which is sent from the transmission side to the reception side. For example, the stream synchronization information, which is inserted into the basic video stream, includes information which indicates the presence of other video streams being in a synchronized relationship. Hence, on the reception side, it is possible to receive the additional video stream on the basis of the information, and thus it is possible to satisfactorily display the stereoscopic image in the 3D program.

### <2. Modified Example>

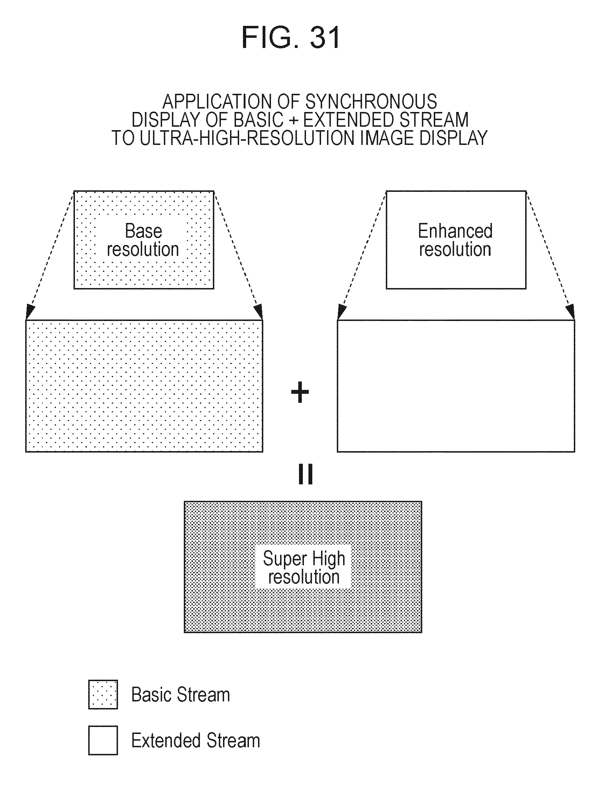

In addition, in the above-mentioned embodiment, a description will be given of a case where transmission of the basic broadcast stream and the extended broadcast stream is applied to display of a stereoscopic image (Stereoscopic video). However, it is apparent that the present technology is also applied to other synchronous display. For example, the present technology can be applied to display of the ultra-high-definition image (Super High resolution video). In this case, as shown in Fig. 31, the first image data is basic resolution image data (Base resolution), and the second image data is enhanced resolution image data (Enhanced resolution).

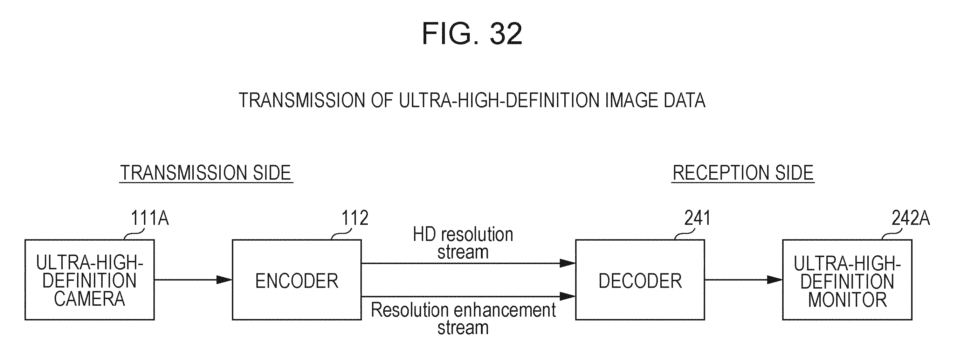

Fig. 32 schematically shows an example of transmission of the ultra-high-definition image data in the broadcast system 10. The transmission side (transmission apparatus 100) has, for example, an ultra-high-definition camera 111A and the encoder 112. The left-eye image data and the right-eye image data, which are obtained by the ultra-high-definition camera 111A, are supplied to the encoder 112. In the encoder 112, the ultra-high-definition image data is separated into basic and enhanced resolution image data sets, the respective image data sets are encoded in an encoding format such as MPEG2 video or AVC, and thereby the basic video stream and the extended video stream are generated.

The basic broadcast stream (HD resolution stream), which has the basic video stream (including the basic resolution image data) generated by the encoder 112, is sent from the transmission side to the reception side through RF radio waves. Further, the extended broadcast stream (resolution enhancement stream), which has the extended video stream (including the enhanced resolution image data) generated by the encoder 112, is sent from the transmission side to the reception side through the IP network.

The reception side (reception apparatus 200) has, for example, a decoder 241 and an ultra-high-definition monitor 242A. In the decoder 241, it is possible to obtain the basic resolution image data by performing decoding processing on the basic video stream belonging to the basic broadcast stream (HD resolution stream). Further, in the decoder 241, it is possible to obtain the enhanced resolution image data by performing decoding processing on the extended video stream belonging to the extended broadcast stream (Resolution enhancement stream). Then, the ultra-high-definition image data, in which the basic resolution image data and the enhanced resolution image data are combined, is supplied to the ultra-high-definition monitor 242A, thereby performing ultra-high-definition image display.

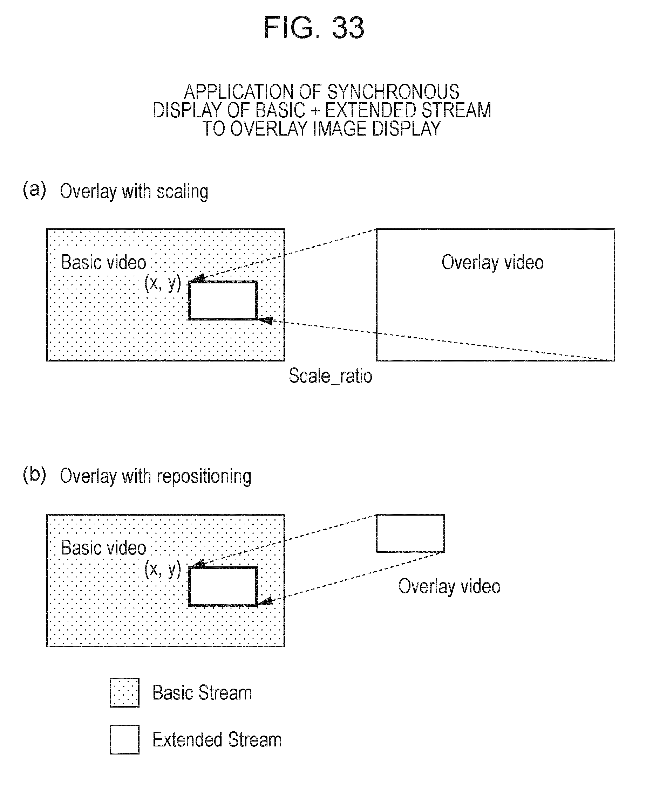

Further, for example, the present technology can be applied to display of an overlay image (Paint Overlay video). In this case, as shown in Fig. 33, the first image data is the basic image data (Basic video), and the second image data is the overlay image data (Overlay video). In addition, in this case, for example, the following cases are considered: (a) a case (Overlay with scaling) where the overlay image (extended stream image) is scaled and is thereafter overlaid on the basic image (basic stream image); and (b) a case (Overlay with repositioning) where the overlay image (extended stream image) is overlaid on the basic image (basic stream image) with its original size. In this case, by performing processing based on "scale_ratio" and "blending_ratio", the overlay is performed.

In the example described above in Fig. 33, overlay is performed by specifying a display position through "position_control_flag", and an image based on the extended stream is overwritten at the display position on the basic stream image in accordance with "scale ratio" and "blending_ratio". Such an overlay example can be applied to a special effect and the like in 2D (two dimensional) display.

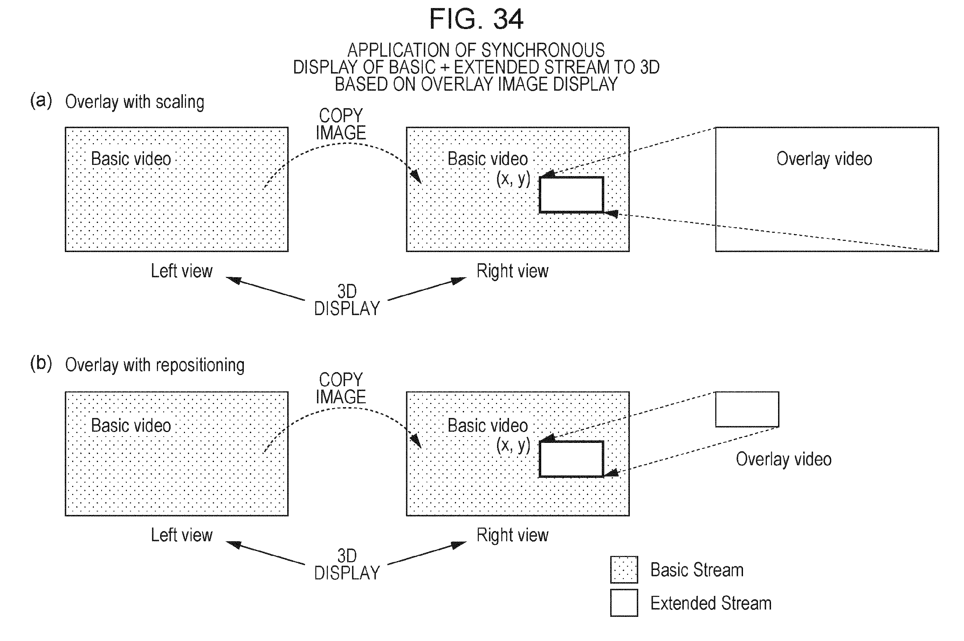

Fig. 34 shows another example in which overlay is performed by specifying the display position through "position_control_flag". In this example, the basic stream image is set as the left-eye image (left view), and the image is copied to the right-eye image (right view). Then, in this example, the image, which is obtained by decoding the extended stream, is overwritten at the display position on the copied right-eye image (right view) in accordance with "scale ratio" and "blending_ratio". In such a manner, it is possible to reproduce a stereoscopic (3D) image with good transmission efficiency.

In addition, also in the example shown in Fig. 34, similarly to the example shown in Fig. 33, for example the following cases are considered: (a) the case (Overlay with scaling) where the overlay image is scaled and is thereafter overlaid; and (b) the case (Overlay with repositioning) where the overlay image is overlaid with its original size.

Further, the above-mentioned embodiment described the case where the basic stream and the extended stream are transmitted by using separate containers. However, even in the case where both are sent by using the same container, the contents of the present technology can be applied with the same mechanism.

Further, the present technology may be applied to a case where the basic stream and the extended stream are based on the same type codec together, or a case where the basic stream and the extended stream are based on separate type codecs. For example, the following cases and the like are considered: the basic stream is MPEG2 video and the extended stream is H.264; or the basic stream is H.264 and the extended stream is MPEG2 video.

In addition, the present technology can be configured as follows.
(1) An image data transmission apparatus including a transmission section that transmits a stream with a predetermined container format which has a first video stream including first image data, wherein stream synchronization information for synchronizing the first video stream with a second video stream, which includes second image data displayed in synchronization with the first image data, frame by frame is inserted into the first video stream.
(2) The image data transmission apparatus set forth in (1), wherein the stream synchronization information is inserted into a picture layer of the first video stream, and wherein the stream synchronization information includes information, which indicates whether or not to skip display of the corresponding frame, and a correction value of timing of displaying the corresponding frame.
(3) The image data transmission apparatus set forth in (2), wherein the stream synchronization information additionally includes information which indicates the number of frames from an initial frame of the stream.
(4) The image data transmission apparatus set forth in (2) or (3), wherein the stream synchronization information additionally includes flag information which indicates presence of the second video stream.
(5) The image data transmission apparatus set forth in any one of (2) to (4), wherein the stream synchronization information additionally includes information which indicates a type of the synchronous display.
(6) The image data transmission apparatus set forth in any one of (1) to (5), wherein initial time stamp information of a basic video stream of the first video stream and the second video stream is inserted into the stream with the predetermined container format.
(7) The image data transmission apparatus set forth in any one of (1) to (6), wherein information, which indicates the number of streams with the predetermined container format with the second video stream including the second image data, is inserted into the stream with the predetermined container format.
(8) The image data transmission apparatus set forth in any one of (1) to (7), wherein information, which indicates whether or not the stream synchronization information is present in a basic video stream of the first video stream and the second video stream, is further inserted into the stream with the predetermined container format.
(9) An image data transmission method including, when transmitting a stream with a predetermined container format which has a first video stream including first image data, inserting stream synchronization information for synchronizing the first video stream with a second video stream, which includes second image data displayed in synchronization with the first image data, into the first video stream frame by frame.
(10) An image data transmission apparatus including a transmission section that transmits a stream with a predetermined container format which has a first video stream including first view image data constituting stereoscopic image data, wherein stream synchronization information for synchronizing the first video stream with a second video stream, which includes second view image data constituting the stereoscopic image data displayed in synchronization with the first view image data, frame by frame is inserted into a predetermined frame of the first video stream.
(11) An image data transmission apparatus including a first transmission section that transmits a first stream with a predetermined container format which has a basic video stream including first image data; and a second transmission section that transmits a second stream with a predetermined container format which has an extended video stream including second image data displayed in synchronization with the first image data, wherein stream synchronization information, which includes information for synchronizing the extended video stream with the basic video stream frame by frame, is inserted into at least the extended video stream.
(12) An image data reception apparatus including a first reception section that receives a second stream with a predetermined container format which has a basic video stream including first image data, and a second reception section that receives a stream with a predetermined container format which has an extended video stream including second image data displayed in synchronization with the first image data, wherein frame synchronization information, which is for synchronizing the basic video stream with the extended video stream frame by frame, is inserted into at least the extended video stream for each frame, and wherein the image data reception apparatus further includes a first data acquisition section that acquires the first image data included in the basic video stream which has a stream received by the first reception section, a second data acquisition section that acquires the second image data included in the extended video stream which has a stream received by the second reception section, and a synchronization management section that synchronizes the second image data, which is acquired by the second data acquisition section, with the first image data, which is acquired by the first data acquisition section, frame by frame on the basis of the frame synchronization information.
(13) An image data reception apparatus including a first reception section that receives a stream with a predetermined container format which has a basic video stream including first image data, and a second reception section that receives a stream with a predetermined container format which has an extended video stream including second image data displayed in synchronization with the first image data, wherein the image data reception apparatus further includes a first data acquisition section that acquires the first image data included in the basic video stream which has a stream received by the first reception section, a second data acquisition section that acquires the second image data included in the extended video stream which has a stream received by the second reception section, and a synchronization management section that synchronizes the second image data, which is acquired by the second data acquisition section, with the first image data, which is acquired by the first data acquisition section, frame by frame on the basis of the time stamp information.

### Reference Signs List

- 10: BROADCAST SYSTEM
- 11: BROADCAST STATION
- 12: USER'S HOME
- 100: TRANSMISSION APPARATUS
- 111: 3D CAMERA
- 111A: ULTRA-HIGH-DEFINITION CAMERA
- 112: ENCODER
- 113: TRANSMISSION SECTION
- 114: TRANSFER SERVER
- 200: RECEPTION APPARATUS
- 201: CPU
- 210: ANTENNA TERMINAL
- 211: DIGITAL TUNER
- 212: STREAM BUFFER
- 213: DEMULTIPLEXER
- 214: VIDEO DECODER
- 215: VIEW BUFFER
- 216: VIDEO OVERLAY SECTION
- 221: NETWORK TERMINAL
- 222: COMMUNICATION INTERFACE (COMMUNICATION I/F)
- 223: STORAGE
- 224: STREAM BUFFER
- 225: DEMULTIPLEXER
- 226: VIDEO DECODER
- 227: VIEW BUFFER
- 228: VIDEO OVERLAY SECTION
- 241: DECODER
- 242: 3D MONITOR
- 242A: ULTRA-HIGH-DEFINITION MONITOR

## Claims

1. An image data transmission apparatus comprising:
a transmission section that transmits a stream with a predetermined container format which has a first video stream including first image data,
wherein stream synchronization information for synchronizing the first video stream with a second video stream, which includes second image data displayed in synchronization with the first image data, frame by frame is inserted into the first video stream.

2. The image data transmission apparatus according to claim 1, wherein the stream synchronization information is inserted into a picture layer of the first video stream, and
wherein the stream synchronization information includes information, which indicates whether or not to skip display of the corresponding frame, and a correction value of timing of displaying the corresponding frame.

3. The image data transmission apparatus according to claim 2, wherein the stream synchronization information additionally includes information which indicates the number of frames from an initial frame of the stream.

4. The image data transmission apparatus according to claim 2, wherein the stream synchronization information additionally includes flag information which indicates presence of the second video stream.

5. The image data transmission apparatus according to claim 2, wherein the stream synchronization information additionally includes information which indicates a type of the synchronous display.

6. The image data transmission apparatus according to claim 1, wherein initial time stamp information of a basic video stream of the first video stream and the second video stream is inserted into the stream with the predetermined container format.

7. The image data transmission apparatus according to claim 1, wherein information, which indicates the number of streams with the predetermined container format with the second video stream including the second image data, is inserted into the stream with the predetermined container format.

8. The image data transmission apparatus according to claim 1, wherein information, which indicates whether or not the stream synchronization information is present in a basic video stream of the first video stream and the second video stream, is further inserted into the stream with the predetermined container format.

9. An image data transmission method comprising, when transmitting a stream with a predetermined container format which has a first video stream including first image data, inserting stream synchronization information for synchronizing the first video stream with a second video stream, which includes second image data displayed in synchronization with the first image data, into the first video stream frame by frame.

10. An image data transmission apparatus comprising:
a transmission section that transmits a stream with a predetermined container format which has a first video stream including first view image data constituting stereoscopic image data,
wherein stream synchronization information for synchronizing the first video stream with a second video stream, which includes second view image data constituting the stereoscopic image data displayed in synchronization with the first view image data, frame by frame is inserted into the first video stream.

11. An image data transmission apparatus comprising:
a first transmission section that transmits a first stream with a predetermined container format which has a basic video stream including first image data; and
a second transmission section that transmits a second stream with a predetermined container format which has an extended video stream including second image data displayed in synchronization with the first image data,
wherein stream synchronization information, which includes information for synchronizing the extended video stream with the basic video stream frame by frame, is inserted into the extended video stream for each frame.

12. An image data reception apparatus comprising:
a first reception section that receives a stream with a predetermined container format which has a basic video stream including first image data; and
a second reception section that receives a stream with a predetermined container format which has an extended video stream including second image data displayed in synchronization with the first image data,
wherein frame synchronization information, which is for synchronizing the basic video stream with the extended video stream frame by frame, is inserted into the extended video stream for each frame, and
wherein the image data reception apparatus further includes
a first data acquisition section that acquires the first image data included in the basic video stream which has the stream received by the first reception section,
a second data acquisition section that acquires the second image data included in the extended video stream which has the stream received by the second reception section, and
a synchronization management section that synchronizes the second image data, which is acquired by the second data acquisition section, with the first image data, which is acquired by the first data acquisition section, frame by frame on the basis of the frame synchronization information.

13. An image data reception apparatus comprising:
a first reception section that receives a stream with a predetermined container format which has a basic video stream including first image data; and
a second reception section that receives a stream with a predetermined container format which has an extended video stream including second image data displayed in synchronization with the first image data,
wherein the image data reception apparatus further includes
a first data acquisition section that acquires the first image data included in the basic video stream which has the stream received by the first reception section,
a second data acquisition section that acquires the second image data included in the extended video stream which has the stream received by the second reception section, and
a synchronization management section that synchronizes the second image data, which is acquired by the second data acquisition section, with the first image data, which is acquired by the first data acquisition section, frame by frame on the basis of time stamp information.
